# EUROPEAN PATENT APPLICATION

(11) **EP 4 671 427 A1**
(43) Date of publication of application: **31.12.2025**
(21) Application number: 24860515.6
(22) Date of filing: 10.07.2024
(51) Int. Cl.: D06F 39/10, D06F 58/22, D06F 39/02, D06F 39/08, D06F 37/04, D06F 105/34, D06F 103/56

(54) **CLOTHES TREATMENT APPARATUS**

(30) Priority: 30.08.2023 KR 20230114168; 26.01.2024 KR 20240012710
(71) Applicant: LG Electronics Inc., Yeongdeungpo-gu Seoul 07336 (KR)
(72) Inventor: LEE, Juhyoung, Seoul 08592 (KR); PARK, Bio, Seoul 08592 (KR); AHN, Seungphyo, Seoul 08592 (KR); JUNG, Joosik, Seoul 08592 (KR)
(74) Representative: Vossius & Partner Patentanwälte Rechtsanwälte mbB
(86) International application number: PCT/KR2024/095911
(87) International publication number: WO 2025/048599

(57) **Abstract**

**Abstract:** A clothes treatment apparatus is disclosed. The clothes treatment apparatus according to one embodiment of the present invention comprises a cabinet, a drum, an air circulation part and a filter part. A filter chamber includes a chamber inlet part in through which air flows in a first direction, and a chamber outlet part through which the air is discharged in a second direction, which intersects the first direction. A filter member includes: an inlet surface which faces the chamber inlet part, and through which the air flows in the first direction into a filter space formed inside the filter member; a first filter surface which is connected to the inlet surface and faces the chamber outlet part, and through which the air in the filter space passes in the second direction and is filtered; and a second filter surface which is connected to the inlet surface, and through which the air in the filter space passes and is filtered, wherein the distance between one surface of the filter chamber facing the second filter surface and the second filter surface decreases as the distance from the inlet surface increases.

## Description

### [Technical Field]

The present disclosure relates to a laundry treating apparatus, and more particularly, to a laundry treating apparatus that may dry laundry.

### [Background]

A laundry treating apparatus is an apparatus that may perform various treatment courses for treating laundry, such as a washing course that puts clothes, bedding, and the like (hereinafter, referred to as the laundry) into a drum and removes contaminants from the laundry or a drying course that removes moisture present in the laundry.

The laundry treating apparatus may perform the drying course of the laundry via various principles. For example, the laundry treating apparatus may perform the drying course using a scheme of providing high-temperature air to an accommodating portion in which the laundry is accommodated to evaporate moisture in the laundry.

Additionally, the laundry treating apparatus may include an air treater for providing high-temperature air, and the air treater may raise a temperature of air in various schemes. For example, the air treater may raise the temperature of air using a heater or the like that is heated by consuming electric power or may raise the temperature of air using a heat pump system that uses heat generated by compressing a fluid such as a refrigerant.

In one example, the air treater may be of a discharge type that supplies air introduced from the outside of a cabinet to the accommodating portion and discharges air in the accommodating portion to the outside of the cabinet or of a circulation type that circulates air in the accommodating portion and treats air to have a high temperature and to be dried.

In one example, the circulation-type air treater may include a filter for removing lint or the like in air to suppress the lint or the like removed from the laundry and contained in air from accumulating in an air heating means, obstructing an air flow, and lowering a heat exchange efficiency.

Related document JP 6321870 B2 discloses a laundry treating apparatus that heats circulating air using the heat pump system and includes the filter to remove foreign substances from circulating air.

During a drying process, a flow rate or air acts as an important factor in a drying efficiency, and therefore, increasing a filtering area of the filter is important in increasing the flow rate of air and improving the drying efficiency.

In addition, even when the filtering area is increased, when uniform air is not provided to the filtering area, an efficiency of the filter may be lowered and the flow rate of air may be reduced.

For example, when a flow channel through which air flows is bent based on design necessity, a flow rate uniformity on a flow cross-section of air at a bending point may be lowered. In this case, even when the filtering area is increased, it is difficult to expect an intact filter performance and an air flow rate increasing effect.

Therefore, increasing a filter capacity, effectively increasing the filtering area, and further improving the air flow uniformity on the filtering cross-section are important tasks in the present technical field.

### [Summary]

### [Technical Problem]

Embodiments of the present disclosure are to provide a laundry treating apparatus that may effectively improve a filter performance.

Additionally, embodiments of the present disclosure are to provide a laundry treating apparatus that may effectively increase a filter capacity and a filtering area.

Additionally, embodiments of the present disclosure are to provide a laundry treating apparatus that may improve a filter performance even when a flow direction of air changes.

Additionally, embodiments of the present disclosure are to provide a laundry treating apparatus that may effectively improve a flow rate uniformity of air on a filter surface of a filter.

Additionally, embodiments of the present disclosure are to provide a laundry treating apparatus that may effectively improve ease of use for extending and retracting a filter.

### [Technical Solutions]

A laundry treating apparatus according to an embodiment of the present disclosure includes an air circulator and a filter assembly. The filter assembly may include a filter chamber, and the filter chamber may include a chamber inlet allowing air to be introduced in a first direction, and a chamber outlet allowing air to be discharged in a second direction intersecting the first direction.

A filter member disposed in the filter assembly may have a plurality of filter surfaces, and as a separation distance of at least one of the plurality of filter surfaces from the filter chamber changes, flow uniformity of air passing through the at least one may be improved.

Such laundry treating apparatus according to an embodiment of the present disclosure includes a cabinet, a drum, the air circulator, and the filter assembly.

The drum is rotatably disposed inside the cabinet and accommodates laundry therein. The air circulator is disposed inside the cabinet and circulates air inside the drum. The filter assembly includes the filter chamber disposed in the air circulator and the filter member disposed in the filter chamber to filter foreign substances in air,

The filter chamber may include a chamber inlet allowing air to be introduced along a first direction and a chamber outlet allowing air to be discharged along a second direction intersecting the first direction.

The filter member may include an inlet surface, a first filter surface, and a second filter surface. The inlet surface faces the chamber inlet and allows air to be introduced into a filter space defined inside the filter member along the first direction.

The first filter surface may be connected to the inlet surface, face the chamber outlet, and allow air in the filter space to pass therethrough along the second direction and be filtered. The second filter surface may be connected to the inlet surface and allow air in the filter space to pass therethrough and be filtered,

A separation distance between one surface of the filter chamber facing the second filter surface and the second filter surface may decrease as a distance from the inlet surface increases.

Air that has passed through the first filter surface and the second filter surface may flow along a separation space between the filter member and the filter chamber and may be discharged via the chamber outlet.

The one surface of the filter chamber facing the second filter surface may extend at an angle with respect to the second filter surface. The one surface of the filter chamber facing the second filter surface may extend at an angle along the first direction.

The second filter surface may face a bottom surface of the filter chamber, and the bottom surface of the filter chamber may extend at an angle such that a separation distance to the second filter surface decreases as a distance from the inlet surface increases.

The filter surface and the second filter surface may extend from the inlet surface along the first direction. The second filter surface may be connected to the inlet surface and the first filter surface.

The second filter surface may face a bottom surface of the filter chamber, and a separation distance between the bottom surface of the filter chamber and the second filter surface may decrease as a distance from the first filter surface increases.

The second filter surface may extend at an angle with respect to the bottom surface of the filter chamber. The second filter surface may extend at an angle from the first filter surface along the second direction.

The filter member may further include a third filter surface connected to the inlet surface and allowing air in the filter space to pass therethrough and be filtered. The first filter surface, the second filter surface, and the third filter surface may extend from the inlet surface along the first direction.

The second filter surface may be connected to the inlet surface and the first filter surface, and the third filter surface may be connected to the inlet surface and the second filter surface, but may be spaced apart from the first filter surface.

The first filter surface may correspond to one of both side surfaces of the filter member along a width direction of the cabinet, the second filter surface may correspond to a bottom surface of the filter member, and the third filter surface may correspond to the other of the both side surfaces of the filter member.

The inlet surface of the filter member may include a filter sealer disposed between the inlet surface and the chamber inlet of the filter chamber to suppress air leakage. A surface of the filter member facing the inlet surface may form a fixed surface fixed to the filter chamber.

The air circulator may be located on the tub inside the cabinet. The filter member may be extended from the filter chamber to the outside of the cabinet via a top surface of the cabinet.

The cabinet may include a top panel defining the top surface thereof, and the top panel may include a filter inlet, wherein the filter member is inserted into the filter inlet.

The air circulator may include a circulation flow channel including an inlet allowing air to be introduced from the tub and an outlet disposed forward of the inlet and allowing air to be discharged to the tub.

The filter assembly may be disposed in the circulation flow channel and disposed forward of the inlet.

The circulation flow channel may include an inflow pipe extending forward from the inlet and connected to the filter chamber. The chamber inlet may be defined in a rear surface of the filter chamber.

The inlet surface may correspond to a rear surface of the filter member, and a front surface of the filter member may form a fixed surface releasably fixed to the filter chamber. The laundry treating apparatus may further include a drainage that is located under the tub inside the cabinet and discharges water from the tub.

The laundry treating apparatus may further include a detergent supply that is located under the tub inside the cabinet and supplies detergent into the tub. The laundry treating apparatus may further include an additional treating apparatus including an additional cabinet located under the cabinet and an additional drum that is disposed inside the additional cabinet and accommodates laundry therein. The cabinet may be disposed on the additional cabinet.

The air circulator may include a first flow channel extending along the first direction and a second flow channel extending from the first flow channel along the second direction, and the filter chamber may be disposed at a connection point of the first flow channel and the second flow channel.

The air circulator may further include a heat exchanger that is disposed in the second flow channel and performs heat exchange between air and a refrigerant.

The chamber outlet of the filter chamber may be defined to face the heat exchanger. The air circulator may further include a heat exchanger that performs heat exchange between air flowing through the air circulator and a refrigerant, and a mounting base including a heat exchange chamber where the filter chamber and the heat exchanger are mounted.

The filter member and the heat exchanger may be aligned parallel to a width direction of the cabinet in the mounting base. The mounting base may be constructed such that the filter chamber and the heat exchange chamber share one surface.

The filter chamber may include the chamber outlet in the one surface shared with the heat exchange chamber, and the heat exchange chamber may receive air via the chamber outlet of the filter chamber.

In one example, a laundry treating apparatus according to an embodiment of the present disclosure may include a cabinet, a drum that is rotatably disposed inside the cabinet and accommodates laundry therein, an air circulator that is disposed inside the cabinet and circulates air inside the drum, and a filter assembly including a filter chamber disposed in the air circulator and a filter member disposed in the filter chamber to filter foreign substances in air.

The filter chamber may include a chamber inlet allowing air to be introduced along a first direction and a chamber outlet allowing air to be discharged along a second direction intersecting the first direction.

The filter member may include an inlet surface facing the chamber inlet and allowing air to be introduced into a filter space defined inside the filter member along the first direction, a first filter surface connected to the inlet surface, facing the chamber outlet, and allowing air in the filter space to pass therethrough along the second direction and be filtered, and a second filter surface connected to the inlet surface and the first filter surface and allowing air in the filter space to pass therethrough and be filtered.

A separation distance between one surface of the filter chamber facing the second filter surface and the second filter surface may decrease as a distance from the first filter surface increases.

### [Advantageous Effects]

The embodiments of the present disclosure may provide the laundry treating apparatus that may effectively improve the filter performance.

Additionally, the embodiments of the present disclosure may provide the laundry treating apparatus that may effectively increase the filter capacity and the filtering area.

Additionally, the embodiments of the present disclosure may provide the laundry treating apparatus that may improve the filter performance even when the flow direction of air changes.

Additionally, the embodiments of the present disclosure may provide the laundry treating apparatus that may effectively improve the flow rate uniformity of air on the filter surface of the filter.

Additionally, the embodiments of the present disclosure may provide the laundry treating apparatus that may effectively improve the ease of use for extending and retracting the filter.

### [Brief Description of the Drawings]

FIG. 1 shows a laundry treating apparatus stacked on an additional treating apparatus according to an embodiment of the present disclosure.
FIG. 2 is a diagram showing a laundry treating apparatus separated from an additional treating apparatus in FIG. 1.
FIG. 3 is a perspective view showing a laundry treating apparatus according to an embodiment of the present disclosure.
FIG. 4 shows a cross-sectional view showing the inside of a laundry treating apparatus according to an embodiment of the present disclosure.
FIG. 5 is a diagram showing an air circulator of a laundry treating apparatus according to an embodiment of the present disclosure.
FIG. 6 shows an air circulator disposed in an upper portion of a cabinet in an embodiment of the present disclosure.
FIG. 7 is an exploded view of a fixing portion for fixing an air circulator in an embodiment of the present disclosure.
FIG. 8 is an exploded view of an air circulator mounted in a cabinet in an embodiment of the present disclosure.
FIG. 9 is an exploded perspective view of an air circulator in an embodiment of the present disclosure.
FIG. 10 shows an air circulator connected to a tub with a cabinet removed in an embodiment of the present disclosure.
FIG. 11 is a diagram showing cross-sections of a detergent supply and an additional treating apparatus disposed under a tub in an embodiment of the present disclosure.
FIG. 12 shows a flow direction of air based on an air circulator in an embodiment of the present disclosure.
FIG. 13 is a top view of an air circulator disposed on a tub in an embodiment of the present disclosure.
FIG. 14 is a diagram showing a filter member separated from a cabinet via a top panel in an embodiment of the present disclosure.
FIG. 15 is a diagram showing a filter member of a laundry treating apparatus according to an embodiment of the present disclosure.
FIG. 16 is a diagram showing a process of separating a filter member from a laundry treating apparatus according to an embodiment of the present disclosure.
FIG. 17 is a diagram showing a fixing protrusion disposed on a filter member in an embodiment of the present disclosure.
FIG. 18 is a diagram showing a filter member being coupled to a filter chamber in an embodiment of the present disclosure.
FIG. 19 is a diagram showing a process in which a fixed surface of a filter member is fixed to a filter chamber in an embodiment of the present disclosure.
FIG. 20 is a diagram showing a filter sealer disposed in a filter member in an embodiment of the present disclosure.
FIG. 21 is a diagram showing an air flow direction inside a filter chamber in an embodiment of the present disclosure.
FIG. 22 is a diagram showing a separation distance between a filter surface and an inner surface of a filter chamber being constant inside the filter chamber.
FIG. 23 is a diagram showing a separation distance between one surface of a filter member and an inner surface of a filter chamber changing in an embodiment of the present disclosure.
FIG. 24 is a diagram showing three filter surfaces disposed in a filter member in an embodiment of the present disclosure.
FIG. 25 is a diagram showing a filter surface of a filter member extending at an angle in an embodiment of the present disclosure.

### [Best Mode]

Hereinafter, with reference to the attached drawings, embodiments of the present disclosure will be described in detail such that those skilled in the art may easily practice them.

However, the present disclosure may be implemented in several different forms and may not be limited to the embodiments described herein. Further, to clearly illustrate the present disclosure in the drawings, parts unrelated to the description are omitted, and similar drawing numerals are assigned to similar parts throughout the present document.

In the present document, redundant descriptions of the same components will be omitted.

Further, in the present document, when a component is referred to as being 'connected' to another component, it should be understood that the components may be directly connected to each other, but there may be another component therebetween. On the other hand, in the present document, when a component is referred to as being 'directly connected' to another component, it should be understood that there is no other component therebetween.

Additionally, the terms used herein are merely used to describe specific embodiments and are not intended to limit the present disclosure.

Further, as used herein, singular expressions may include plural expressions, unless the context clearly dictates otherwise.

In addition, in the present document, it should be understood that terms such as 'include' or 'have' are only intended to indicate the presence of features, numbers, steps, operations, components, parts, or combinations thereof described herein, and do not preclude the presence or addition of other features, numbers, steps, operations, components, parts, or combinations thereof.

Further, in the present document, the term 'and/or' includes a combination of a plurality of listed items or any of the plurality of listed items. As used herein, 'A or B' may include 'A', 'B', or 'both A and B'.

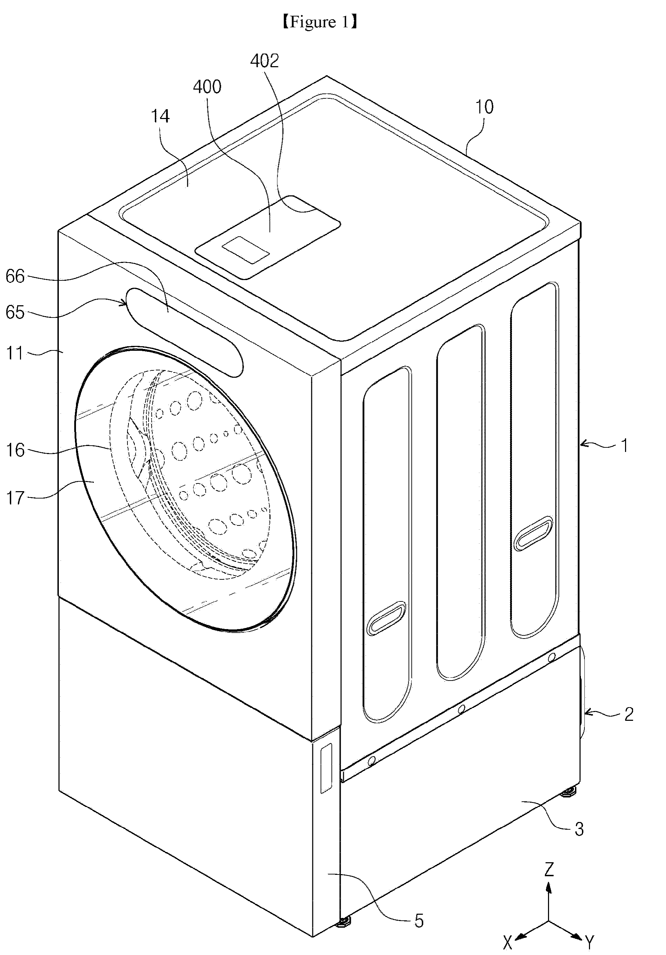

FIG. 1 shows a laundry treating apparatus 1 according to an embodiment of the present disclosure disposed on an additional treating apparatus 2.

The laundry treating apparatus (first treating apparatus) 1 according to an embodiment of the present disclosure may be disposed to be vertically stacked with the additional treating apparatus (second treating apparatus) 2. For example, the laundry treating apparatus 1 may include a cabinet (first cabinet) 10 forming an outer appearance thereof, and the cabinet 10 may be disposed on top of the additional treating apparatus 2.

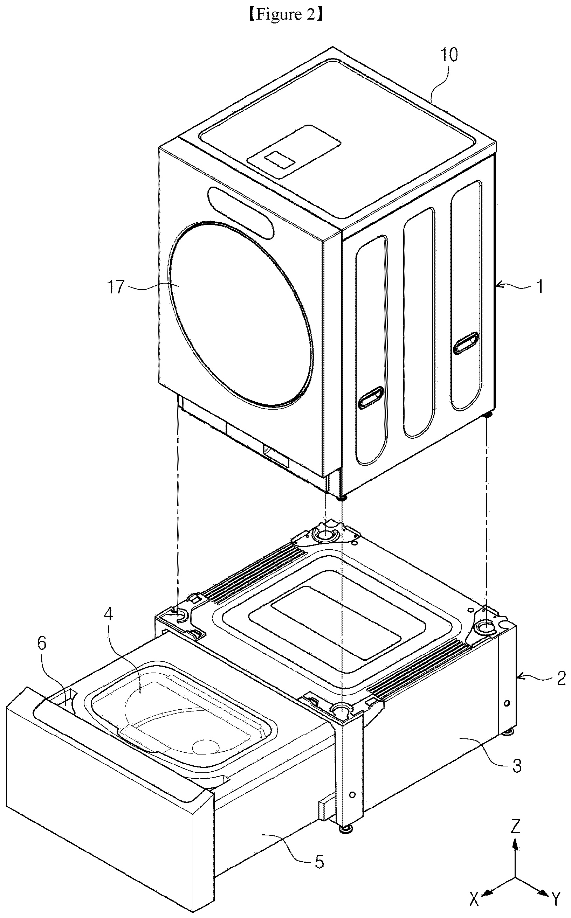

The laundry treating apparatus 1 according to an embodiment of the present disclosure may perform a washing process or a drying process for laundry accommodated inside the cabinet 10. As shown in FIG. 2, the additional treating apparatus 2 may wash or dry laundry accommodated inside an additional drum (second drum) 4 independently of the laundry treating apparatus 1.

The additional treating apparatus 2 may include an additional cabinet (second cabinet) 3 located beneath the cabinet 10 and the additional drum 4 disposed inside the additional cabinet 3 to accommodate the laundry therein. The cabinet 10 may be disposed on top of the additional cabinet 3.

The laundry treating apparatus 1 according to an embodiment of the present disclosure may be defined to include the additional treating apparatus 2. For example, the laundry treating apparatus 1 according to an embodiment of the present disclosure may be defined as an entirety including the cabinet 10 and the additional cabinet 3.

Hereinafter, unless otherwise specified, a treating apparatus disposed in a stacked form on top of the additional treating apparatus 2 will be described as the laundry treating apparatus 1 according to an embodiment of the present disclosure.

FIG. 2 is a diagram showing the laundry treating apparatus 1 according to an embodiment of the present disclosure separated from the additional treating apparatus 2.

Referring to FIG. 2, the laundry treating apparatus 1 according to an embodiment of the present disclosure may be used together with or independently of the additional treating apparatus 2.

The laundry treating apparatus 1 may have a bottom surface positioned on top of a top surface of the additional cabinet 3 of the additional treating apparatus 2, and the bottom surface may have a leg that is to support a load by being positioned on the ground or on the top surface of the additional cabinet 3.

The additional treating apparatus 2 may also include a leg seating portion for seating the leg of the laundry treating apparatus 1 on the top surface of the additional cabinet 3.

The laundry treating apparatus 1 may be of a front loader type in which a door 17 and a laundry inlet are formed at a front surface thereof, and the additional treating apparatus 2 may be of a pedestal type in which a drawer 5 is disposed inside the additional cabinet 3 forming an outer appearance thereof.

The drawer 5 may be retracted into or extended from the additional cabinet 3 via an open front surface of the additional cabinet 3. The drawer 5 may include the additional drum 4 to accommodate the laundry therein, and may include an additional detergent compartment 6 to store detergent used in the washing process therein.

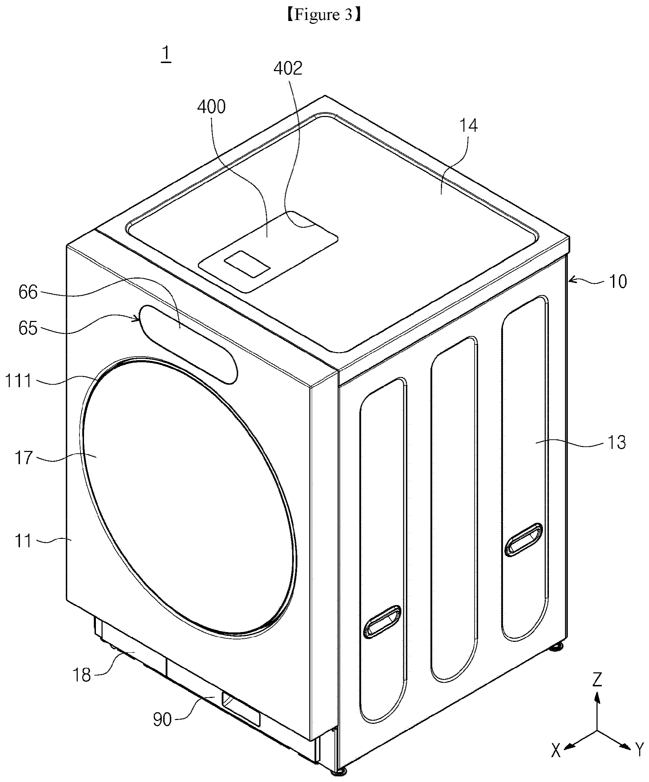

FIG. 3 shows the laundry treating apparatus 1 according to an embodiment of the present disclosure, excluding the additional treating apparatus 2.

The laundry treating apparatus 1 includes the cabinet 10 described above. The cabinet 10 may be formed by coupling a plurality of panels to each other, and may form the outer appearance of the laundry treating apparatus 1. A space in which various components may be disposed may be defined inside the cabinet 10.

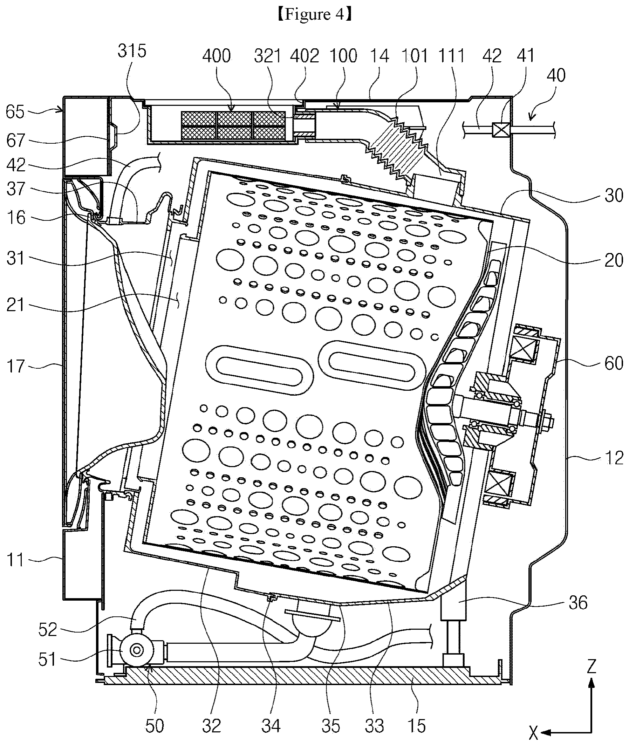

As shown in FIG. 4, the cabinet 10 may include a front panel 11 forming the front surface of the laundry treating apparatus 1, a rear panel 12 forming a rear surface, a pair of side panels 13 forming both side surfaces, a top panel 14 forming the top surface, and a base panel 15 forming the bottom surface.

A laundry inlet 16 may be defined in the front surface of the cabinet 10. The laundry inlet 16 may be defined in the front panel 11. The front panel 11 may have the door 17 for opening and closing the laundry inlet 16. The door 17 may be pivotably disposed on the front panel 11 to open and close the laundry inlet 16 depending on a pivoting state.

As shown in FIG. 3, the front panel 11 may include a manipulation panel 65 that provides various information to a user or receives a command by being manipulated by the user. The manipulation panel 65 may include a display 66 for outputting a screen, and the display 66 may be exposed to the outside from the front panel 11.

The display 66 may allow input of the user command on the screen. For example, the display 66 is able to sense a touch by the user.

A withdrawal cover 18 and a detergent supply 90 may be disposed at a bottom of the front panel 11. The bottom of the front panel 11 may be a portion of the front panel 11 including a lower end of the front panel 11 or may be a component separate from the front panel 11, for example, a front surface of the base panel 15.

The withdrawal cover 18 may be disposed to cover and shield, from the outside, a component that may be withdrawn from the inside of the cabinet 10 to the outside (an apparatus or a component that may be withdrawn from the cabinet). The user may open the withdrawal cover 18 to expose the component to be withdrawn to the outside, or close the withdrawal cover 18 to shield the component to be withdrawn from the outside.

The component to be withdrawn may be set in various ways as needed. For example, as shown in FIG. 4, to remove residual water present in a drainage 50, which will be described later, a residual water pipe extending from the drainage 50, a drain filter disposed in a drain pump 51 of the drainage 50, or the like may be the withdrawable component.

The detergent supply 90 may be disposed at a lower portion of the cabinet 10 such that at least a portion thereof may be extendable forwardly of the cabinet 10. For example, the detergent supply 90 may include a detergent casing fixed inside the cabinet 10 and a detergent storage that is retracted into or extended from the detergent casing along a front and rear direction X.

However, a location of the detergent supply 90 is not necessarily limited to the lower portion of the cabinet 10. When necessary, the detergent supply 90 may be disposed at an upper portion of the cabinet 10 as will be described later.

In one example, the top panel 14 may form the top surface of the cabinet 10. Additionally, in an embodiment of the present disclosure, the top panel 14 may include a filter inlet 402 into which a filter member 400, which will be described later, is inserted.

The filter member 400 may filter foreign substances in air of an air circulator 100 disposed in the laundry treating apparatus 1, as will be described later. The filter member 400 may be inserted into the filter inlet 402 to form the top surface of the cabinet 10 together with the top panel 14.

FIG. 4 shows a cross-sectional view showing the inside of the laundry treating apparatus 1 according to an embodiment of the present disclosure.

For reference, the laundry treating apparatus 1 according to an embodiment of the present disclosure may perform one of the washing process and the drying process described above or may perform both.

For convenience of description, a following description will be based on a structure of the laundry treating apparatus 1, which may perform both the washing process and the drying process. However, when necessary, the laundry treating apparatus l may be changed to a component that may perform one of the washing process and the drying process.

The laundry treating apparatus 1 according to an embodiment of the present disclosure may include a tub 30. The tub 30 may be disposed inside the cabinet 10 and contain water therein.

The tub 30 may have a substantially cylindrical shape, and may have a space for storing water defined therein. A central axis of the tub 30 may be approximately parallel to the front and rear direction X, or the tub 30 may be installed to be inclined such that a front surface thereof is located at a higher vertical level than a rear surface thereof.

The tub 30 may include a tub inlet 31 facing the laundry inlet 16. The front surface of the tub 30 facing the front panel 11 of the cabinet 10 may have the tub inlet 31 facing the laundry inlet 16 of the cabinet 10.

The laundry put into the cabinet 10 via the laundry inlet 16 may be put into the tub 30 via the tub inlet 31. A tub gasket 37 to prevent leakage of the laundry and water may be disposed between the front surface of the tub 30 and the front panel 11.

In one example, the tub 30 may be formed by coupling a plurality of divided components to each other. For example, the tub 30 may be formed by coupling a front divided tub 32 and a rear divided tub 33 to each other.

The front divided tub 32 may include a front portion of the tub 30. The front divided tub 32 may include the tub inlet 31 that opens toward the front surface of the cabinet 10 and a front portion of a circumferential surface 35 of the tub 30.

The rear divided tub 33 may include a rear portion of the tub 30. The rear divided tub 33 may include the rear surface of the tub 30 facing the rear surface of the cabinet 10 and a rear portion of the circumferential surface 35 of the tub 30.

The circumferential surface 35 of the tub 30 may be formed by coupling the front divided tub 32 and the rear divided tub 33 to each other. A portion located at a front side of the circumferential surface 35 of the tub 30 may belong to the front divided tub 32, and a remaining portion located at a rear side of the circumferential surface 35 of the tub 30 may belong to the rear divided tub 33.

Accordingly, a coupling line 34 where the front divided tub 32 and the rear divided tub 33 are coupled may be located on the circumferential surface 35 of the tub 30. The coupling line 34 may extend along a circumferential direction of the tub 30. The coupling line 34 may be located on the circumferential surface 35 of the tub 30 and may have a ring shape.

The laundry treating apparatus 1 includes a drum 20. The drum 20 may be defined as an accommodating portion of the laundry where the laundry is directly accommodated. The drum 20 may be rotatably disposed inside the tub 30 and may accommodate the laundry therein.

A drum inlet 21 facing the tub inlet 31 and the laundry inlet 16 may be defined in a front surface of the drum 20. The laundry put into the cabinet 10 via the laundry inlet 16 may pass through the tub inlet 31 and the drum inlet 21 and may be accommodated inside the drum 20.

The drum 20 may have an approximately cylindrical shape, and a central axis thereof may be approximately parallel to the central axis of the tub 30. A plurality of holes may be defined in a circumferential surface of the drum 20 such that water contained within the tub 30 may be provided into the drum 20.

A rear surface of the drum 20 may face the rear surface of the tub 30, and may be coupled with a driver 60. The driver 60 may provide a rotational force to the drum 20 via a driving shaft coupled to the rear surface of the drum 20. The driver 60 may be fixed to the rear surface of the tub 30 or the rear surface of the cabinet 10, and may be coupled to the rear surface of the drum 20 via the driving shaft.

The laundry treating apparatus 1 may include a water supply 40. The water supply 40 may be connected to a water supply source present outside the laundry treating apparatus 1 to supply water into the cabinet 10.

The water supply 40 may include a water supply pipe 42 for allowing water flowing toward the tub 30 to flow and a water supply valve 41 for regulating the flow of water. The number of water supply pipes 42 and the number of water supply valves 41 may vary depending on need.

The laundry treating apparatus 1 may include the drainage 50. The drainage 50 may be connected to the tub 30 and may discharge water contained in the tub 30 to the outside of the cabinet 10.

The drainage 50 may be disposed under the tub 30, and may include a drain pipe 52 that forms a flow path for water discharged from the tub 30 and the drain pump 51 for discharging water from the tub 30.

A manipulation module 67 constituting the manipulation panel 65 described above may be disposed at the rear of the display 66 described above. The display 66 may be operated by being connected to the manipulation module 67 at a location in front of the manipulation module 67. The manipulation module 67 may be equipped with a display control board to control the display 66.

A tub support 36 to support the tub 30 may be disposed inside the cabinet 10. The tub support 36 may extend from the tub 30 toward the base panel 15 described above and may support a load of the tub 30 with respect to the base panel 15.

In one example, the laundry treating apparatus 1 according to an embodiment of the present disclosure may include the air circulator 100 for performing the drying process of the laundry.

In an embodiment of the present disclosure, the air circulator 100 may be disposed on the tub 30, so that air inside the tub 30 may circulate.

Air inside the tub 30 or the drum 20 may be discharged to the outside of the tub 30 and introduced into the air circulator 100, and the air circulator 100 may heat and dehumidify air and then allow air to be introduced back into the tub 30 or the drum 20.

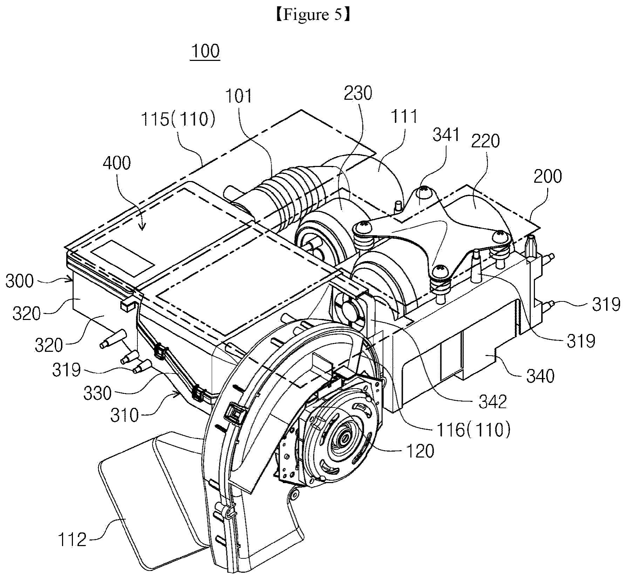

FIG. 5 is a perspective view of the air circulator 100 of the laundry treating apparatus 1 according to an embodiment of the present disclosure.

Air inside the tub 30 may be circulated via the air circulator 100. Air discharged from the tub 30 may be introduced into the air circulator 100, and air discharged from the air circulator 100 may be introduced back into the tub 30.

The air circulator 100 may include a circulation flow channel 110 through which air in the tub 30 circulates. The circulation flow channel 110 may include an inlet 111 located on the tub 30 and through which air is introduced from the tub 30, and an outlet 112 located ahead of the inlet 111 to discharge air into the tub 30.

The inlet 111 may introduce air discharged from the tub 30 into the circulation flow channel 110, and the outlet 112 may discharge air inside the circulation flow channel 110 into the tub 30.

In an embodiment of the present disclosure, the circulation flow channel 110 may include a first flow channel 115 and a second flow channel 116. The first flow channel 115 may extend forward from the inlet 111. The second flow channel 116 may extend from the first flow channel 115 along a width direction of the cabinet 10 (a Y-axis direction).

In an embodiment of the present disclosure, the circulation flow channel 110 may be disposed on the tub 30 inside the cabinet 10. Accordingly, an arrangement space for components disposed under the tub 30, such as the drainage 50, the tub support 36, and the detergent supply 90, may be effectively secured under the tub 30.

In one example, the air circulator 100 may perform various treatment processes such as heating or dehumidifying circulating air, and may include various components therefor. However, in consideration of a spatial limitation of the air circulator 100 disposed on the tub 30 inside the cabinet 10, the circulation flow channel 110 may include the first flow channel 115 and the second flow channel 116 extending in different directions.

That is, the circulation flow channel 110 may extend in a scheme of being curved or bent at a connection portion where the first flow channel 115 and the second flow channel 116 are connected to each other. Accordingly, a space where the components for the air flow and treatment may be arranged may be effectively secured in an upper space of the cabinet 10.

The air circulator 100 may include the filter member 400 to filter the foreign substances such as lint in air discharged from the tub 30. The filter member 400 may be disposed in the circulation flow channel 110 and may filter the foreign substances in air.

In an embodiment of the present disclosure, the filter member 400 may be disposed at the connection portion of the first flow channel 115 and the second flow channel 116. Therefore, air flowing through the first flow channel 115 may be filtered while passing through the filter member 400, and then be introduced into the second flow channel 116.

The first flow channel 115 and the second flow channel 116 may have the different extension directions. Accordingly, turbulence may increase while air flows from the first flow channel 115 to the second flow channel 116, which may have a detrimental effect on a flow performance of air.

Because the filter member 400 may also act as a resistance to the flow of air, the turbulence of air passing through the first flow channel 115 and the second flow channel 116 may be aggravated by the filter member 400. Accordingly, when the filter member 400 and the connection portion (a connection space between the first flow channel 115 and the second flow channel 116) are disposed to be spaced apart from each other, a plurality of sections that reduce the flow performance of air are formed, which may be disadvantageous for reducing the turbulence of air.

An embodiment of the present disclosure may unify sections where a flow resistance of air is increased as the filter member 400 is disposed at the connection portion of the first flow channel 115 and the second flow channel 116, thereby effectively reducing the air flow performance degradation throughout the air circulator 100.

The air circulator 100 may include an air treater 300 that may heat and dehumidify air. The air treater 300 may correspond to at least a portion of the second flow channel 116. The air treater 300 may form a portion of the circulation flow channel 110 and may include the filter member 400 and a heat exchanger 210.

The heat exchanger 210 of the air treater 300 may be constructed such that heat in air and heat of a refrigerant are exchanged. The heat exchanger 210 may take heat from air and condense moisture in air, or may supply heat to air to heat air.

The filter member 400 may be disposed upstream of the heat exchanger 210 in the circulation flow channel 110 to suppress the foreign substances in air from accumulating in the heat exchanger 210. The air treater 300 may include a mounting base 310 for the heat exchanger 210 and the like to be mounted.

The air circulator 100 may include at least a portion of a refrigerant circulator 200 that absorbs heat or releases heat by circulating the refrigerant. The refrigerant circulator 200 may include the heat exchanger 210 described above, a compressor 220 for compressing the refrigerant, and the like.

At least a portion of the refrigerant circulator 200 may correspond to a portion of the air circulator 100. For example, at least a portion of the refrigerant circulation unit 200 may be located in the circulation flow channel 110 of the air circulator 100.

At least a portion of the refrigerant circulator 200, for example, the heat exchanger 210 of the refrigerant circulator 200, may be mounted in the mounting base 310 of the air treater 300. The filter member 400 described above may also be mounted in the mounting base 310. That is, the filter member 400 and the heat exchanger 210 may be mounted together inside the mounting base 310.

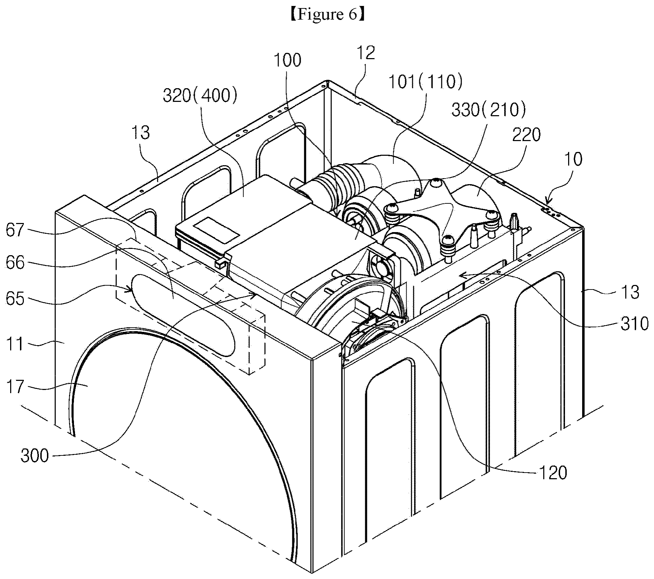

FIG. 6 shows the air circulator 100 disposed in the upper portion of the cabinet 10 according to an embodiment of the present disclosure.

In an embodiment of the present disclosure, the refrigerant circulator 200 as well as the air circulator 100 may be entirely located on the tub 30. Air in the tub 30 may be discharged toward the air circulator 100 from the rear side of the tub 30, for example, the rear divided tub 33 of the tub 30, and air in the air circulator 100 may be introduced into the tub 30 via the tub inlet 31 or the tub gasket 37 disposed at the front side of the tub 30, for example, the front divided tub 32.

In an embodiment of the present disclosure, the laundry may be accommodated inside the drum 20 that is installed inside the tub 30. In this case, the circumferential surface of the drum 20 or the like may act as a resistance when air introduced into the tub 30 from the outside of the tub 30 flows into the drum 20.

For example, when air in the tub 30 is discharged to the air circulator 100 via the tub inlet 31, air in the air circulator 100 needs to be introduced into the tub 30 from the rear side of the tub 30 because of an arrangement of the components.

In this case, aside from the discharge of air inside the tub 30, air introduced into the tub 30 is not able to flow into the drum 20 because the circumferential surface of the drum 20 acts as a high level resistance, and is able to flow between the circumferential surface 35 of the tub 30 and the circumferential surface of the drum 20.

In other words, a situation in which high-temperature dry air provided from the air circulator 100 is not delivered to the laundry inside the drum 20 may occur.

For air in the air circulator 100 to be easily delivered into the drum 20, an embodiment of the present disclosure may inject air in the air circulator 100 toward the tub inlet 31 in communication with the drum inlet 21. By allowing air inside the tub 30 to be discharged from the rear side of the tub 30, at least high-temperature dry air in the air circulator 100 may be completely delivered into the drum 20.

That is, in an embodiment of the present disclosure, air may flow from a front side to a rear side inside the tub 30 or the drum 20. The inlet 111 disposed in the air circulator 100 may be located at the rear side of the tub 30, and the outlet 112 of air may be located at the front side of the tub 30, for example, on the tub gasket 37.

Additionally, in an embodiment of the present disclosure, the filter member 400 may be separated upwardly of the cabinet 10 via the filter inlet 402 formed in the top panel 14 of the cabinet 10. In an embodiment of the present disclosure, the filter member 400 may have a three-dimensional structure having a filter space 401 defined and a plurality of filter surfaces 420 as will be described later to increase a storage capacity for the foreign substances, improve a filter efficiency, and improve the flow performance of air.

The filter member 400 requires management by the user, such as removal of the collected foreign substances, and accordingly, it is necessary to ensure ease of use in separating and coupling the filter member 400.

However, as described above, the laundry treating apparatus l may include the manipulation panel 65, and the manipulation panel 65 may be disposed at a front portion of the front panel 11, for example, upward of the door 17, in consideration of the ease of use.

That is, the manipulation panel 65 including the display 66 and the manipulation module 67 may be located in front of the filter member 400. When the filter member 400 having the three-dimensional structure is to be extended via the front panel 11, an area size corresponding to a volume of the filter member 400 needs to be secured at the upper portion of the front panel 11, but it may be difficult to secure the volume of the filter member 400 or an opening for extending the filter member 400 when considering the manipulation panel 65 or the like.

Accordingly, an embodiment of the present disclosure may form the filter inlet 402 for retracting or extending the filter member 400 in the top panel 14 and may retract or extend the filter member 400 via the top panel 14 in a height direction Z of the cabinet 10, so that the user may conveniently extend or retract the filter member 400 again without structural interference in a relationship with the manipulation panel 65 or the like even when the volume of the filter member 400 is increased.

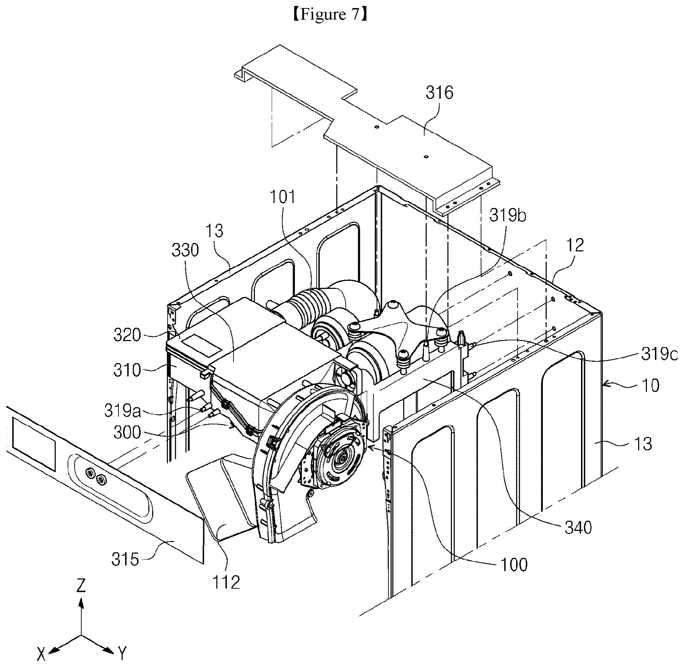

FIG. 7 shows a fixing portion for fixing the air circulator 100 in an embodiment of the present disclosure.

In an embodiment of the present disclosure, the air circulator 100 may be located on the tub 30 and fixed to the cabinet 10. To fix the air circulator 100, a fixing portion coupled to the cabinet 10 and the air circulator 100 may be disposed.

The fixing portion may include a plurality of fixing portions. For example, the fixing portion may include a front fixing portion 315 located in front of the air circulator 100 and an upper fixing portion 316 located on the air circulator 100.

The fixing portion may be coupled with the mounting base 310 of the air treater 300 disposed in the air circulator 100. In an embodiment of the present disclosure, a load of the mounting base 310 where the heat exchanger 210, the compressor 220, the filter member 400, and the like may be disposed may be supported and fixed by the fixing portion.

The front fixing portion 315 may be coupled to the cabinet 10 at a location in front of the air circulator 100. The front fixing portion 315 may extend along the width direction of the cabinet 10 (the Y-axis direction) and may have a plate shape. The front fixing portion 315 may be fixed by being coupled to the front panel 11 or by having both ends coupled to the side panels 13.

The air circulator 100 may be coupled to the front fixing portion 315. For example, the air circulator 100 may include a base coupling portion 319a that protrudes forward from the mounting base 310. The base coupling portion 319a may protrude forward from a filter chamber 320 or a heat exchange chamber 330, which will be described later. The base coupling portion 319a may be inserted into the front fixing portion 315.

The upper fixing portion 316 may be coupled to the cabinet 10 on the air circulator 100. The upper fixing portion 316 may extend along the width direction of the cabinet 10 (the Y-axis direction) and may have a plate shape. The upper fixing portion 316 may be fixed by being coupled to the top panel 14 or by having both ends coupled to the side panels 13.

The air circulator 100 may be coupled to the upper fixing portion 316. For example, the air circulator 100 may include a base coupling portion 319b that protrudes upward from the mounting base 310. The base coupling portion 319b may protrude upward from a compressor chamber 340. The base coupling portion 319b may be inserted into the upper fixing portion 316.

Additionally, the air circulator 100 may be directly coupled to the cabinet 10 excluding the fixing portion. For example, the air circulator 100 may be fixed at a front side by the front fixing portion 315, at an upper side by the upper fixing portion 316, and at a rear side by being directly coupled to the rear panel 12 of the cabinet 10.

The air circulator 100 may include a base coupling portion 319c that protrudes rearward from the mounting base 310. The base coupling portion 319c may protrude rearward from the compressor chamber 340 and may be inserted into the rear panel 12.

An embodiment of the present disclosure may stably fix the air circulator 100 including the refrigerant circulator 200 in the upper portion of the cabinet 10 via the plurality of base coupling portions 319a, 319b, and 319c and/or the plurality of fixing portions disposed on the air circulator 100.

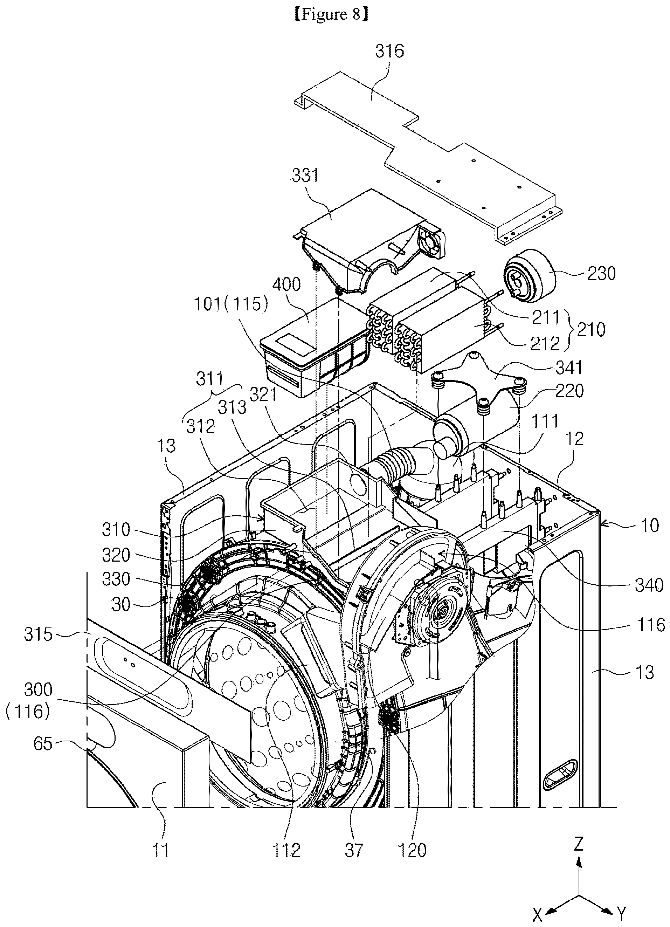

FIG. 8 is an exploded view of the components disposed in the air circulator 100 disposed in the upper portion of the cabinet 10.

Specifically, the air circulator 100 may include the circulation flow channel 110 through which air circulates, and the circulation flow channel 110 may include the first flow channel 115 and the second flow channel 116. The first flow channel 115 may extend approximately along the front and rear direction (an X-axis direction).

The first flow channel 115 may include the inlet 111 connected to the tub 30 and into which air is introduced from the tub 30, and may include an inflow pipe 101 extending forward from the inlet 111. Air introduced via the inlet 111 may flow forward along the inflow pipe 101.

The inlet 111 may be disposed at one end of the inflow pipe 101, and the other end of the inflow pipe 101 may be coupled to the mounting base 310. Accordingly, air flowing along the inflow pipe 101 may flow along the inside of the mounting base 310.

The mounting base 310 may form at least a portion of the second flow channel 116 extending approximately along the width direction of the cabinet 10 (the Y-axis direction). Air introduced into the mounting base 310 via the inflow pipe 101 may flow along the inside of the mounting base 310 in the width direction of the cabinet 10 (the Y-axis direction).

The above-described air treater 300 may be defined by the mounting base 310. For example, the heat exchanger 210 or the like for treating air may be mounted in the mounting base 310.

The heat exchanger 210 may be disposed on the circulation flow channel 110 and may be located forward of the inlet 111, and the heat exchange between air and the refrigerant may be achieved. The heat exchanger 210 may be a portion of the refrigerant circulator 200 described above.

The heat exchanger 210 may include a plurality of heat exchangers, and the plurality of heat exchangers 210 may include a first heat exchanger 211 and a second heat exchanger 212. An embodiment of the present disclosure may perform a dehumidifying process of removing moisture from air and/or a heating process of heating air via the plurality of heat exchangers 210.

In one example, the above-described filter member 400 may be located in one side of the mounting base 310 in the width direction of the cabinet 10 (the Y-axis direction), and the heat exchanger 210 may be located in the other side of the mounting base 310 in the width direction (the Y-axis direction).

For example, the filter member 400 may be disposed in front of the inflow pipe 101, and the heat exchanger 210 may be located on one side of the filter member 400 in the width direction (the Y-axis direction). A space where the filter member 400 is disposed in the mounting base 310 may correspond to the connection portion of the first flow channel 115 and the second flow channel 116.

The filter member 400 and the heat exchanger 210 may be aligned along the width direction of the cabinet 10 (the Y-axis direction). In the circulation flow channel 110, the heat exchanger 210 is located downstream of the filter member 400, so that air from which the foreign substances are filtered may pass through the heat exchanger 210 via the filter member 400. Air passing through the heat exchanger 210 may be treated to have a high temperature and to be dried and may be introduced back into the tub 30.

The refrigerant circulator 200 may further include the compressor 220. The compressor 220 may be installed in the compressor chamber 340 disposed in the mounting base 310. The compressor 220 may be located on the tub 30, may be connected to the heat exchanger 210, and may compress the refrigerant.

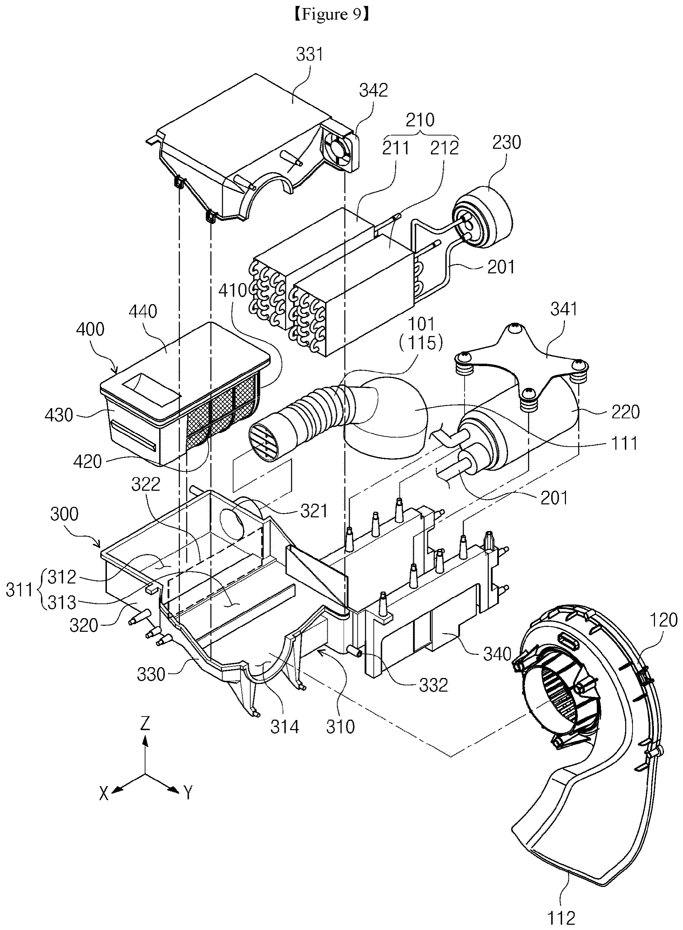

FIG. 9 is an exploded perspective view of the air circulator 100. With reference to FIG. 9, each component of the air circulator 100 will be described in detail as follows.

The air circulator 100 may include the inflow pipe 101. The inflow pipe 101 may form at least a portion of the first flow channel 115 of the circulation flow channel 110. The one end of the inflow pipe 101 may include the inlet 111 connected to the tub 30, and the other end of the inflow pipe 101 may be connected to the mounting base 310.

The inflow pipe 101 may extend forward from the inlet 111. Air discharged from the tub 30 may be introduced into the inflow pipe 101 via the inlet 111, and air flowing along the inflow pipe 101 may be delivered to the mounting base 310.

The above-described filter member 400 and heat exchanger 210 may be mounted in the mounting base 310. The mounting base 310 may include a mounting space 311 where the filter member 400 and the heat exchanger 210 are mounted. A top surface of the mounting space 311 may be open.

The filter member 400 and the heat exchanger 210 may be accommodated in the mounting space 311. The mounting space 311 may include a filter mounting space 312 in which the filter member 400 is mounted and a heat exchanger mounting space 313 in which the heat exchanger 210 is mounted.

The mounting base 310 may include the filter chamber 320 in which the filter member 400 is mounted. The filter chamber 320 may include the filter mounting space 312. The filter member 400 may be disposed inside the filter chamber 320.

The filter chamber 320 may correspond to the connection portion of the first flow channel 115 and the second flow channel 116 described above. The inflow pipe 101 and the filter chamber 320 may together form the first flow channel 115. The filter chamber 320 may include a chamber inlet 321 to which the inflow pipe 101 is connected.

The chamber inlet 321 may be formed on one surface of the filter chamber 320. The chamber inlet 321 may be formed on a rear surface of the filter chamber 320. The filter chamber 320 may be located in front of the inflow pipe 101.

The filter member 400 disposed in the filter mounting space 312 of the filter chamber 320 may include therein the filter space 401 in which air to be filtered is accommodated. The filter member 400 may have an inlet surface 410 defined in one surface thereof facing the chamber inlet 321 for air to be introduced into the filter space 401.

For example, a rear surface of the filter member 400 facing the chamber inlet 321 may be open to define the inlet surface 410. Air introduced into the filter chamber 320 via the chamber inlet 321 may be delivered to the filter space 401 inside the filter member 400 via the inlet surface 410 of the filter member 400.

The filter chamber 320 may surround the filter space 401, and the filter surface 420 may be disposed on at least some of a plurality of surfaces defining the filter space 401. The foreign substances may be filtered as air in the filter space 401 passes through the filter surface 420.

The mounting base 310 may include the heat exchange chamber 330 in which the heat exchanger 210 is mounted. The heat exchanger mounting space 313 may be defined inside the heat exchange chamber 330, and the heat exchange chamber 330 may be located in the width direction of the cabinet 10 (the Y-axis direction) with respect to the filter chamber 320.

The filter chamber 320 and the heat exchange chamber 330 may together form at least a portion of the second flow channel 116. The mounting space 311 may correspond to at least a portion of the second flow channel 116 described above. The mounting space 311 may extend along the width direction of the cabinet 10 (the Y-axis direction).

The filter chamber 320 may be located on one side of the heat exchange chamber 330 in the width direction (the Y-axis direction), and the heat exchange chamber 330 may be located on the other side of the filter chamber 320 in the width direction (the Y-axis direction). The filter chamber 320 may include a chamber outlet 322 through which filtered air is discharged from the filter chamber 320.

Air discharged from the filter chamber 320 via the chamber outlet 322 of the filter chamber 320 may be introduced into the heat exchanger mounting space 313 of the heat exchange chamber 330. In the mounting base 310, the filter chamber 320 and the heat exchange chamber 330 may be separated from each other or the filter chamber 320 and the heat exchange chamber 330 may be integrally molded.

In this case, the filter chamber 320 and the heat exchange chamber 330 may be connected to each other to share one surface with each other. For example, one side surface of the heat exchange chamber 330 may correspond to one side surface of the filter chamber 320.

The chamber outlet 322 may be defined in one surface shared by the filter chamber 320 and the heat exchange chamber 330. The chamber outlet 322 may be defined in a form of a hole in the one surface, or may be defined as the one surface is opened.

That is, in an embodiment of the present disclosure, the filter chamber 320 and the heat exchange chamber 330 may be disposed to share the open surface with each other, and the open surface may correspond to the chamber outlet 322 of the filter chamber 320. Accordingly, air filtered via the filter member 400 may flow toward the heat exchanger 210 along the open surface.

The heat exchanger 210 may include a refrigerant pipe 201 through which the refrigerant flows. The refrigerant pipe 201 may be in contact with air passing through the heat exchanger 210, and the heat exchange may occur between the refrigerant flowing through the refrigerant pipe 201 and air.

The heat exchanger 210 may include the plurality of heat exchangers. The plurality of heat exchangers 210 may include the first heat exchanger 211 and the second heat exchanger 212 described above. The first heat exchanger 211 and the second heat exchanger 212 may be disposed together in the heat exchange chamber 330. The filter chamber 320, the first heat exchanger 211, and the second heat exchanger 212 may be disposed along the width direction (the Y-axis direction).

Air introduced into the heat exchange chamber 330 from the filter chamber 320 may pass through the first heat exchanger 211 and then through the second heat exchanger 212. The first heat exchanger 211 may absorb heat of air via the refrigerant, and the second heat exchanger 212 may supply heat to air via the refrigerant.

Air that has passed through the first heat exchanger 211 may lose heat and cause moisture in air to condense. Accordingly, moisture from air may be removed. In other words, the dehumidification process of air may be performed via the first heat exchanger 211. A condensate outlet 332 to discharge condensate generated from the first heat exchanger 211 may be disposed in the mounting base 310 or the heat exchange chamber 330.

The heat exchange chamber 330 may include a base outlet 314 through which air that has introduced from the filter chamber 320 and passed through the heat exchanger 210 is discharged. The base outlet 314 may be defined in a surface opposite to the one surface where the chamber outlet 322 of the filter chamber 320 is defined. The base outlet 314 may be defined in a form of a hole in the opposing surface or may be defined as the opposing surface is opened.

The base outlet 314 may be a means through which air in the mounting base 310 is discharged. For example, air may be introduced into the mounting base 310 via the chamber inlet 321 of the filter chamber 320, and air may be discharged from the mounting base 310 via the base outlet 314 of the heat exchange chamber 330.

Air introduced into the mounting base 310 may be introduced along a first direction, and air discharged from the mounting base 310 may be discharged along a second direction. The first direction and the second direction may intersect each other, the first direction may be the front and rear direction of the cabinet 10 (the X-axis direction), and the second direction may be the width direction of the cabinet 10 (the Y-axis direction).

The air circulator 100 may include an air fan 120 for flowing air. As the air fan 120 operates, air in the circulation flow channel 110 may flow. The air fan 120 may be coupled to the mounting base 310. The air fan 120 may form the second flow channel 116 of the circulation flow channel 110 together with the mounting base 310.

The air fan 120 may be in communication with the base outlet 314 of the mounting base 310. The air fan 120 may be coupled to the mounting base 310 and may be in communication with the inside of the tub 30. The air fan 120 may allow the inside of the mounting base 310 and the inside of the tub 30 to be in communication with each other. The air fan 120 may include the outlet 112 coupled to the tub gasket 37. The outlet 112 may be a means for discharging air from the air circulator 100.

Air discharged via the base outlet 314 of the mounting base 310 may flow by the air fan 120 and be re-introduced into the tub 30. Air flowing along the circulation flow channel 110 of the air circulator 100 may be introduced into the tub 30 by passing through the tub gasket 37 via the outlet 112 disposed in the air fan 120.

In one example, the air treater 300 may include a heat exchange cover 331. The heat exchange cover 331 may be coupled to the mounting base 310 to cover a portion of the open top surface of the mounting base 310.

The heat exchange cover 331 may be disposed to cover the open top surface of the heat exchange chamber 330. The heat exchange cover 331 may be located on the heat exchanger mounting space 313. The heat exchanger 210 may be located under the heat exchange cover 331.

The open top surface of the heat exchange chamber 330 may be covered by the heat exchange cover 331, and an open top surface of the filter chamber 320 may be maintained in an open state. That is, the heat exchange cover 331 may be positioned to cover the top surface of the heat exchange chamber 330 and open the top surface of the filter chamber 320.

In an embodiment of the present disclosure, the filter member 400 may be retracted into or extended from the mounting space 311 via the open top surface of the mounting base 310. The filter member 400 may be extended out of the cabinet 10 or retracted back into the cabinet 10 via the open top surface of the filter chamber 320.

A top surface of the filter member 400 may correspond to the top surface of the filter chamber 320. The filter member 400 may be extended out of the cabinet 10 or retracted into the cabinet 10 along the height direction of the cabinet 10 (the Z-axis direction) via the filter inlet 402 disposed in the top panel 14 of the cabinet 10.

In one example, the mounting base 310 may include the compressor chamber 340. The compressor chamber 340 may be located rearward of the heat exchange chamber 330, and the compressor 220 may be installed in the compressor chamber 340. The compressor chamber 340 may be molded separately from the heat exchange chamber 330 and then coupled thereto, or the heat exchange chamber 330 and the compressor chamber 340 may be molded integrally.

The compressor chamber 340 may extend rearward from the heat exchange chamber 330. The compressor 220 may be installed in the compressor chamber 340 such that a longitudinal direction thereof is approximately parallel to the ground. The compressor 220 may compress the refrigerant, and the refrigerant whose temperature has risen while being compressed may be delivered to the heat exchanger 210.

For example, the refrigerant compressed via the compressor 220 may become in a high temperature and high pressure state and may be delivered to the second heat exchanger 212. Accordingly, the second heat exchanger 212 may transfer the heat of the high-temperature refrigerant to air to raise the temperature of air.

The refrigerant of the second heat exchanger 212 may be delivered to the first heat exchanger 211 via a pressure regulator 230. The pressure regulator 230 may connect the first heat exchanger 211 with the second heat exchanger 212 and may regulate a pressure of the refrigerant.

For example, the pressure regulator 230 may lower the pressure of the refrigerant delivered from the second heat exchanger 212, thereby lowering the temperature of the refrigerant or causing a phase change in the refrigerant. The refrigerant that has passed through the pressure regulator 230 may be delivered to the first heat exchanger 211, and the first heat exchanger 211 may condense moisture in air while the refrigerant absorbs the heat from air.

The compressor chamber 340 may include a compressor fixing portion 341 for fixing the compressor 220. The compressor fixing portion 341 may be installed on the compressor chamber 340 to fix the compressor 220 and suppress vibration or the like.

Additionally, the mounting base 310 may include a compressor cooler 342 to cool the compressor 220. The compressor cooler 342 may cool the compressor 220 by providing unheated air to the compressor 220 using a fan.

The refrigerant circulator 200 may include the compressor 220, the first heat exchanger 211, the second heat exchanger 212, the pressure regulator 230, and the like, the heating and the cooling of the refrigerant may be achieved via a refrigerant flow channel through which the refrigerant circulates, and the heating or the cooling of air may be performed via the heat exchange between the refrigerant and air.

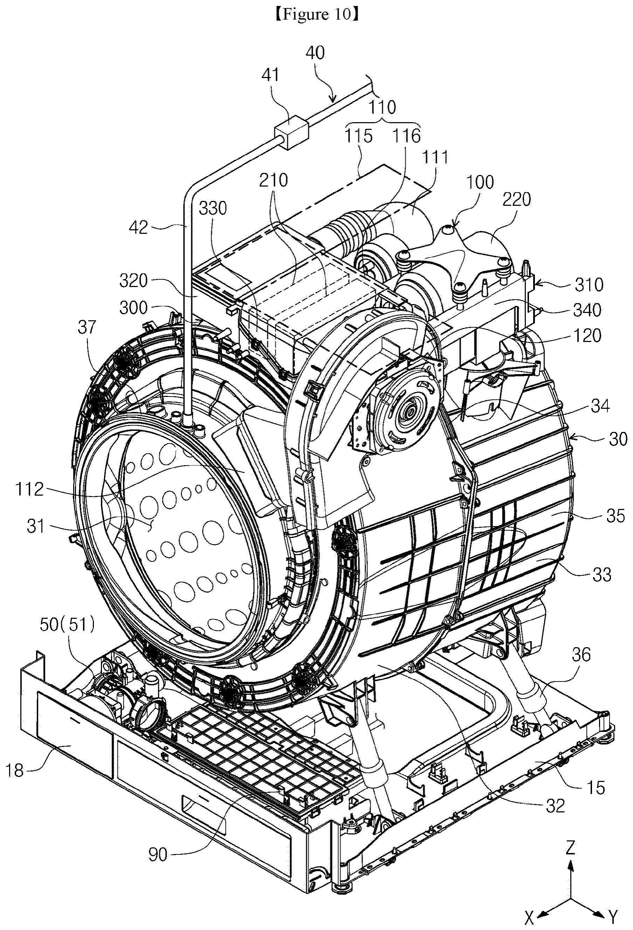

FIG. 10 shows the air circulator 100 located on the tub 30 with the cabinet 10 removed.

In an embodiment of the present disclosure, the air circulator 100 may be positioned entirely on the tub 30. Additionally, the refrigerant flow channel including the heat exchanger 210 and the compressor 220 and through which the refrigerant circulates may be located entirely on the tub 30.

Various components may be disposed in a lower portion of the space defined inside the cabinet 10. For example, the drainage 50, the detergent supply 90, the tub support 36, and the like may be disposed in the lower portion of the cabinet 10.

Such various components may be disposed on the base panel 15, and therefore, when the air circulator 100, which includes the refrigerant circulator 200 and dehumidifies and heats air to circulate air, is disposed in the lower portion of the cabinet 10, significant spatial constraints may act.

For example, when designing the air circulator 100 36 in the lower portion of the cabinet 10 in consideration of the drainage 50 or the tub support, a size and a capacity of the compressor 220 for compressing the refrigerant are inevitably reduced, and a size and a performance of the heat exchanger 210 for the heat exchange with air are also inevitably reduced.

Furthermore, when the air circulator 100 is disposed in the lower portion of the cabinet 10, that is, in a space under the tub 30, where the multiple components are distributed, there is a high possibility that the various components included in the air circulator 100 will be distributed, and accordingly, the refrigerant flow channel as well as the air flow channel may become complicated and a negative impact may act on the flow performance of air.

In addition, in the drying process, air supplied into the tub 30 is easy to flow along an upper portion of the tub 30 because of an influence of the high temperature, and further, a reservoir space of water for drainage or the like is disposed in the lower portion of the tub 30, which is disadvantageous in terms of fluidity of air, so that it may be advantageous for air to circulate via the upper portion of the tub 30.

Therefore, placing the air circulator 100 including the refrigerant circulator 200 in the lower space of the cabinet 10 (a lower area of an interior space of the cabinet) may be disadvantageous not only in terms of the space constraints but also in terms of the air fluidity. Accordingly, in an embodiment of the present disclosure, the air circulator 100 including the refrigerant circulator 200 may be disposed entirely in the upper space of the cabinet 10 (an upper area of the interior space of the cabinet).

For reference, when the compressor 220, which has a potential to generate the vibration, in the refrigerant circulator 200 is disposed in the lower space of the cabinet 10, it may be advantageous to reduce the vibration. However, the laundry treating apparatus 1 according to an embodiment of the present disclosure may be disposed on top of the additional treating apparatus 2 as well as on the ground, as described above. In this case, even when the compressor 220 is disposed in the lower space of the cabinet 10, the laundry treating apparatus 1 may be at a certain vertical level from the ground because of the additional treating apparatus 2, so that the disadvantages (the spatial restrictions and the worsening of the air fluidity) may be greater than the effect of reducing the vibration.

Furthermore, an embodiment of the present disclosure may strengthen a fixing force of the compressor 220 and minimize the vibration caused by the compressor 220 as the compressor chamber 340, the compressor fixing portion 341, and the like of the mounting base 310 for stably fixing the compressor 220 are disposed even when the compressor 220 is disposed on the tub 30.

For reference, a case in which some components of the air circulator 100 are disposed on the tub 30 and the rest are disposed under the tub 30, for example, a case in which the air circulation flow channel 110 is disposed on the tub 30 and the refrigerant circulator 200, for example, the compressor 220 or the heat exchanger 210, is disposed under the tub 30 may be considered.

However, in this case, at least a portion of the circulation flow channel 110 of air needs to eventually pass through the refrigerant circulator 200, for example, the heat exchanger 210, and thus a length of the refrigerant flow channel is increased or a length of the circulation flow channel 110 of air is increased, which is inefficient in the air flow and the refrigerant flow and is able to actually result in unnecessary consumption of the interior space of the cabinet 10.

An embodiment of the present disclosure may efficiently use the interior space of the cabinet 10 and may be advantageous in the air flow and the refrigerant flow as the air circulator 100 including the refrigerant circulator 200 is entirely disposed on the tub 30.

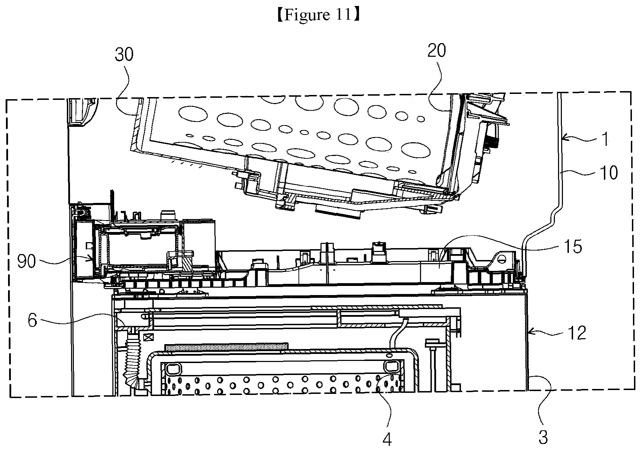

FIG. 11 shows delivering detergent to the aforementioned additional treating apparatus 2 via the detergent supply 90 of the laundry treating apparatus 1 according to an embodiment of the present disclosure.

In an embodiment of the present disclosure, the detergent supply 90 may be located under the tub 30 and may be connected to the tub 30 to supply the detergent into the tub 30. In one example, the cabinet 10 of the laundry treating apparatus 1 may be disposed on the additional cabinet 3 of the additional treating apparatus 2.

In this case, the detergent supply 90 may deliver the detergent to the additional detergent compartment 6 of the additional treating apparatus 2 by passing through the base panel 15. In the additional treating apparatus 2, the drawer 5 in which the additional drum 4 and the additional detergent compartment 6 are installed may be retracted into the additional cabinet 3, and the detergent supply 90 may supply the detergent into the additional detergent compartment 6 while the drawer 5 is retracted.

That is, in an embodiment of the present disclosure, the detergent supply 90 is disposed under the tub 30, so that even when the user does not separately supply the detergent to the additional detergent compartment 6 of the additional treating apparatus 2, the detergent may be supplied to the additional treating apparatus 2 via the detergent supply 90.

However, the present disclosure is not necessarily limited as above. For example, the detergent supply 90 may not deliver the detergent to the additional treating apparatus 2 even when being disposed under the tub 30, and the detergent supply 90 may be disposed on the tub 30 and may be located in the upper space of the cabinet 10 together with the air circulator 100.

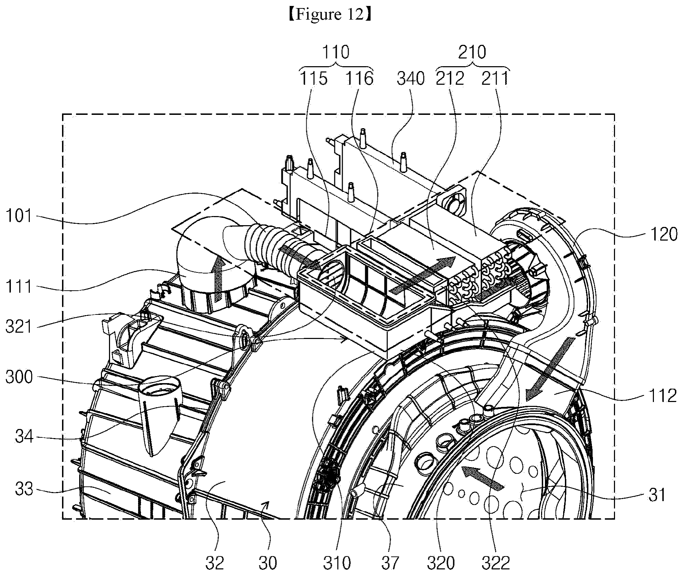

FIG. 12 shows a flow direction of air flowing in the air circulator 100 indicated by an arrow.

As described above, in the drying process, it may be advantageous for air inside the tub 30 to be introduced or discharged via the upper portion of the tub 30 because of the influence of the high temperature and shape characteristics of the inside of the tub 30.

In addition, as described above, in the process in which air is introduced into the tub 30, the circumferential surface of the drum 20 may obstruct the flow of air flowing into the drum 20, and accordingly, it may be advantageous for at least air introduced into the tub 30 to be introduced into the tub 30 via the tub inlet 31 defined in the front surface of the tub 30.

In an embodiment of the present disclosure, the inlet 111 of the air circulator 100 through which air in the tub 30 is introduced into the circulation flow channel 110 may be located on the tub 30. For example, the inlet 111 may be allow air to be introduced via the circumferential surface 35 of the tub 30 along the height direction of the cabinet 10 (the Z-axis direction).

The inlet 111 may be disposed at a rear side of the tub 30. For example, the inlet 111 may be disposed on the rear divided tub 33 of the tub 30. Air inside the tub 30 may be discharged from the tub 30 at the rear side of the tub 30.

The inflow pipe 101 of the air circulator 100 may include the inlet 111 and may extend forward from the inlet 111. However, the extension direction of the inflow pipe 101 does not necessarily have to coincide with the front and rear direction of the cabinet 10 (the X-axis direction), and when necessary, the extension direction of the inflow pipe 101 may be at an angle with respect to the front and rear direction (the X-axis direction).

The inlet 111 may be disposed at one end of the inflow pipe 101, and the other end of the inflow pipe 101 may be located forward of the inlet 111 and may be coupled to the mounting base 310. Portions of interior spaces of the inflow pipe 101 and the mounting base 310 may form the first flow channel 115.

Air discharged from tub 30 may flow from the rear side to the front side of the tub 30 along the first flow channel 115.

In one example, the air circulator 100 may include various components such as the inlet 111 through which air is introduced, the outlet 112 through which air is discharged, a path for air to flow, and the heat exchanger 210 for adjusting the temperature of air.

Accordingly, designing the air circulator 100 to be approximately parallel to the front and rear direction of the cabinet 10 (the X-axis direction) like the first flow channel 115 may be disadvantageous when considering a length in the front and rear direction (the X-axis direction) of the cabinet 10.

Considering the same, the air circulator 100 according to an embodiment of the present disclosure may efficiently utilize the limited space on the tub 30 as the first flow channel 115 extending approximately along the front and rear direction of the cabinet 10 (the X-axis direction) and the second flow channel 116 extending in a direction different from that of the first flow channel 115, for example, approximately along the width direction of the cabinet 10 (the Y-axis direction).

In the circulation flow channel 110 of the air circulator 100 corresponding to a flow path of air, the first flow channel 115 may extend approximately along the front and rear direction of the cabinet 10 (the X-axis direction), and the second flow channel 116 may extend approximately along the width direction of the cabinet 10 (the Y-axis direction). That is, in an embodiment of the present disclosure, the circulation flow channel 110 may be formed to be bent at a front side of the cabinet 10.

At least a portion of the second flow channel 116 may be formed by the space defined inside the mounting base 310. Air introduced into the mounting base 310 may flow approximately in the width direction of the cabinet 10 (the Y-axis direction) along the space defined inside the mounting base 310.

Air discharged from the mounting base 310 may flow toward the inside of the tub 30 by the air fan 120. Inside the cabinet 10, the tub gasket 37 that seals a space between the laundry inlet 16 and the tub inlet 31 may be disposed, and the outlet 112 of the circulation flow channel 110 may be connected to the tub gasket 37.

The outlet 112 may be defined by the air fan 120. One side of the air fan 120 may be coupled to the mounting base 310, and the other side of the air fan 120 may be coupled to the tub gasket 37. The other side of the air fan 120 may correspond to the outlet 112 of the circulation flow channel 110.

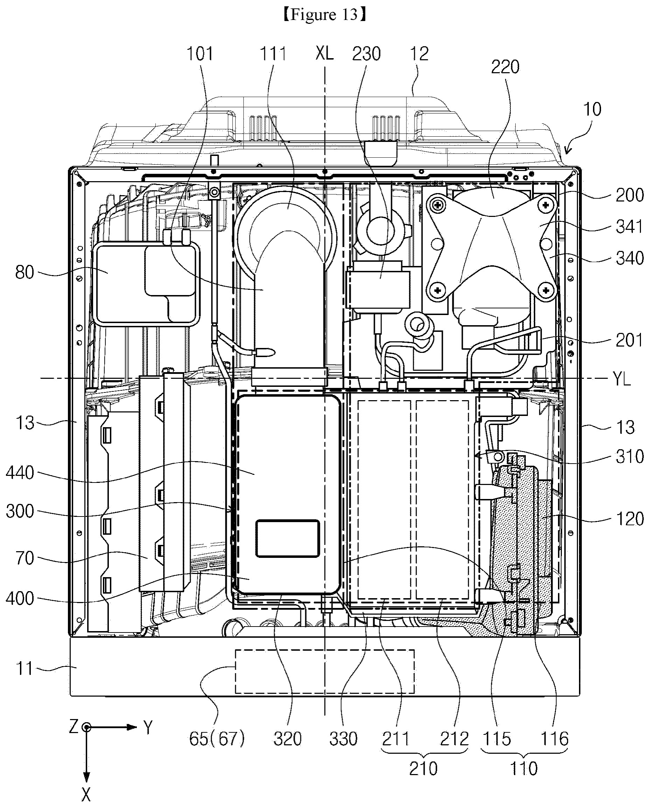

As shown in FIG. 13, when defining a straight line passing through a center of the tub 30 and parallel to the front and rear direction of the cabinet 10 (the X-axis direction) as a center line XL, the outlet 112 of the circulation flow channel 110 may be spaced apart from the front and rear direction-center line XL in the width direction of the cabinet 10 (the Y-axis direction).

For example, the water supply pipe 42 for supplying water into the tub 30 may be connected to or other components may be disposed in an area adjacent to the front and rear direction-center line XL of an upper portion of the tub gasket 37.

Accordingly, the outlet 112 of the air fan 120 may be coupled to the tub gasket 37 at a location spaced apart from an uppermost end of the tub gasket 37 in the width direction of the cabinet 10 (the Y-axis direction).

The laundry treating apparatus 1 according to an embodiment of the present disclosure may include the above-described filter member 400, and the filter member 400 may be located between the inlet 111 of the circulation flow channel 110 and the heat exchanger 210 to filter the foreign substances in air.

The filter member 400 may be located forward of the inlet 111. Accordingly, the inlet 111 for introducing air into the air circulator 100 may be disposed at the rear side of the tub 30, and air from the rear side of the tub 30 may be discharged and re-introduced into the front side of the tub 30.

Additionally, the filter member 400 requires management by the user because of functional characteristics thereof. For example, the user needs to clean the filter member 400 or remove the foreign substances or the like collected in the filter member 400.

In other words, for the filter member 400, accessibility of the user may be an important issue. An embodiment of the present disclosure may allow the user to conveniently manage the filter member 400 by placing the filter member 400 at the front side.

In one example, the filter member 400 may have a three-dimensional shape with a volume and may include the filter space 401 defined therein. The filter member 400 may have various shapes, such as a rectangular or cylindrical shape, depending on need.

Even when the filter member 400 having the predetermined volume as described above is disposed at the front side on the tub 30 in consideration of ease of use, it may be difficult to retract and extend the filter member 400 via the front panel 11.

For example, the above-described control panel may be disposed on the upper portion of the front panel 11 for ease of use thereof, and therefore, when the filter member 400 disposed at the rear of the control panel includes the filter space 401 and includes the plurality of filter surfaces 420 according to an embodiment of the present disclosure, it may be difficult to define a hole or the like of a size corresponding to the filter member 400 in the upper portion of the front panel 11.

The manipulation panel 65 may include the control panel, may be disposed on the front surface of the cabinet 10, and may be manipulated by the user to generate a command signal from the user. The manipulation panel 65 may be disposed approximately at an upper center of the front panel 11. The manipulation panel 65 may be located in front of the filter member 400.

Accordingly, an embodiment of the present disclosure may allow the filter member 400 to be retracted into or extended from the circulation flow channel 110 via the top surface of the cabinet 10 while having the three-dimensional shape having the filter space 401 and the at least one filter surface 420, so that the extension and the retraction of the filter member 400 may be conveniently performed.

The filter member 400 may be aligned with the heat exchanger 210 along the width direction of the cabinet 10 (the Y-axis direction). Air in the circulation flow channel 110 may flow along the width direction Y to sequentially pass through the filter member 400 and the heat exchanger 210.

That is, in an embodiment of the present disclosure, the heat exchanger 210 may also be disposed in the front side of the cabinet 10 such that the filter member 400 may be disposed in the front side of the cabinet 10. Based on the flow of air, the filter member 400 may be located upstream of the heat exchanger 210, and accordingly, the filter member 400 and the heat exchanger 210 may be aligned along the width direction (the Y-axis direction).

The compressor 220 described above may be located on the tub 30, may be connected to the heat exchanger 210, and may compress the refrigerant. The compressor 220 may be a vibrating body that generates vibration, and therefore, placing the compressor 220 at the front side inside the cabinet 10 may be disadvantageous in suppressing the vibration transmitted to the user.

Accordingly, in an embodiment of the present disclosure, the compressor 220 may be disposed in a rear area of the interior space of the cabinet 10, and the heat exchanger 210 and the filter member 400 may be disposed forward of the compressor 220.

The circulation flow channel 110 of the air circulator 100 may include the first flow channel 115 and the second flow channel 116, the first flow channel 115 may extend forward from the inlet 111, and the second flow channel 116 may extend from the first flow channel 115 along the width direction of the cabinet 10 (the Y-axis direction).

The first flow channel 115 may be located on one side of the compressor 220 in the width direction of the cabinet 10 (the Y-axis direction). The second flow channel 116 may be located in front of the compressor 220. The rear panel 12 may be disposed at the rear of the compressor 220, the first flow channel 115 may be located on one side of the compressor 220 in the width direction (the Y-axis direction), the side panel 13 may be located on the other side of the compressor 220 in the width direction (the Y-axis direction), and the second flow channel 116 may be located in front of the compressor 220.

The inlet 111 of the circulation flow channel 110 may be located on one side of the compressor 220 in the width direction of the cabinet 10 (the Y-axis direction). The inlet 111 may be disposed rearward of a front end of the compressor 220.

The filter member 400 may be located forward of the compressor 220. The filter member 400 may be located in front of the inlet 111 and may be located forward of the compressor 220.

Accordingly, the filter member 400 may be located at the front side inside the cabinet 10 to improve the convenience of use, and the compressor 220 may be disposed at the rear side to minimize the transmission of the vibration or the like to the user. A rear end of the filter member 400 may be located forward of the front end of the compressor 220.

In one example, when a straight line passing through the center of the tub 30 and parallel to the width direction of the cabinet 10 (the Y-axis direction) is defined as a width direction-center line YL, the filter member 400 may be located forward of the width direction-center line YL. The rear end of the filter member 400 may be located forward of the width direction-center line YL. Additionally, a center of the filter member 400 may be located forward of the width direction-center line YL.

The inlet 111 of the circulation flow channel 110 may be disposed on the rear divided tub 33 of the tub 30. That is, the inlet 111 may be coupled to the rear divided tub 33, so that air existing in the rear divided tub 33 may be discharged from the tub 30 toward the air circulator 100.

The filter member 400 may be disposed on the front divided tub 32. For example, the filter chamber 320 into which the filter member 400 is inserted may be located on the front divided tub 32. The heat exchange chamber 330 may also be located on the front divided tub 32.

The heat exchanger 210 may be disposed on the front divided tub 32. The compressor 220 may be disposed on the rear divided tub 33. The heat exchanger 210 may be located forward of the compressor 220.

The filter member 400 may be located forward of the coupling line 34 that occurs as the front divided tub 32 and the rear divided tub 33 are coupled to each other. The rear end of the filter member 400 may be located forward of the coupling line 34.

The filter member 400 may be retracted into or extended from the circulation flow channel 110 via the filter inlet 402 of the top panel 14 located forward of the coupling line 34.

The front and rear direction-center line XL may be positioned to cross the filter member 400. That is, a portion of the filter member 400 may be located on the front and rear direction-center line XL. As the filter member 400 is disposed approximately at a center of the top panel 14, an unnecessary increase in the length of the circulation flow channel 110 may be prevented and convenience of use may be improved.

The front and rear direction-center line XL may be positioned to cross the inlet 111. The inlet 111 may be disposed at the rear of the filter member 400, and may be located on the front and rear direction-center line XL together with the filter member 400.

The filter member 400 may be located forward of the inflow pipe 101 of the air circulator 100. The filter member 400 may be located forward of the compressor 220 or the pressure regulator 230 of the refrigerant circulator 200. The filter member 400, the heat exchanger 210, and the air fan 120 may be arranged approximately along the width direction of the cabinet 10 (the Y-axis direction).

The air circulator 100 may be entirely disposed to be biased to one side or the other side in the width direction (the Y-axis direction) in the upper space of the cabinet 10. For example, a space in which components other than the air circulator 100 may be disposed may be secured at one side in the width direction of the air circulator 100 (the Y-axis direction) in the upper space of the cabinet 10 located on the tub 30.

In other words, various components other than the air circulator 100 may be disposed in the upper space of the cabinet 10 located on the tub 30. For example, the laundry treating apparatus 1 according to an embodiment of the present disclosure may include a steam generator 80.

The steam generator 80 may be located on the tub 30 and on one side of the circulation flow channel 110 in the width direction of the cabinet 10 (the Y-axis direction) and may generate steam. The steam generator 80 may generate steam to be provided into the tub 30 during the washing process or the drying process.

The steam generator 80 may be located on one side of the air circulator 100 in the width direction (the Y-axis direction). The filter member 400 may be located forward of the steam generator 80. That is, the steam generator 80 may be located rearward of the filter member 400.

In one example, the laundry treating apparatus 1 may further include a control module 70. The control module 70 may be located on the tub 30 and on one side of the circulation flow channel 110 in the width direction of the cabinet 10 (the Y-axis direction) and may control the air circulator 100.

The control module 70 may control various components and may include a control board for controlling the various components. For example, the control module 70 may be connected in a signal manner to at least one of the steam generator 80, the compressor 220, the air fan 120, the manipulation panel 65, and the driver 60 described above to issue a control command.

The control module 70 may be located on one side of the air circulator 100 in the width direction (the Y-axis direction). The control module 70 may be located on one side of the filter member 400 in the width direction of the cabinet 10 (the Y-axis direction). The control module 70 may be located in front of the steam generator 80 described above.

In one example, in an embodiment of the present disclosure, the inlet 111 may be constructed to allow air to be introduced at the rear side of the tub 30. However, the inlet 111 may not be necessarily disposed at the rear of the filter member 400, and the location of the inlet 111 may be changed along the width direction (the Y-axis direction) as needed.

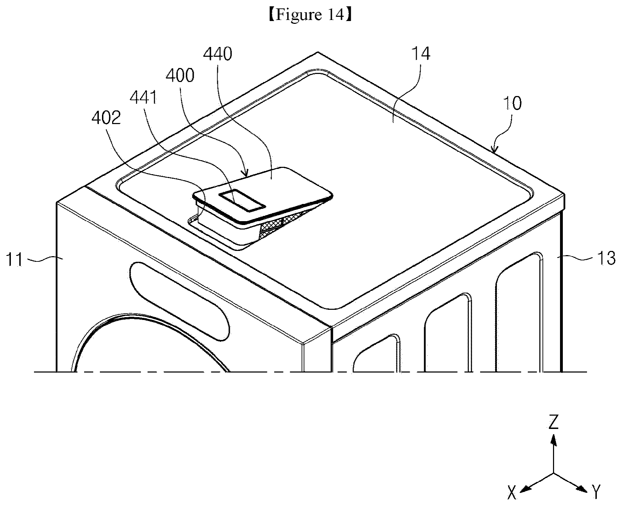

FIG. 14 shows the filter member 400 extended from the inside of the cabinet 10 to the outside via the top panel 14 according to an embodiment of the present disclosure.

The top panel 14 may include the filter inlet 402 into which the filter member 400 is inserted. The filter inlet 402 may be located on the filter chamber 320. The filter inlet 402 may be disposed to correspond to the open top surface of the filter chamber 320.

When the filter member 400 is inserted into the filter chamber 320, the top surface of the filter member 400 may correspond to the top surface that closes the filter chamber 320, and may form the top surface of the cabinet 10 together with the top panel 14.

That is, the top surface of the filter member 400 may form a portion of the top surface of the cabinet 10 and may be located on the same plane as the top panel 14. Accordingly, even when the filter inlet 402 is formed in the top panel 14, a sense of unity in the outer appearance may be given to the user.

An embodiment of the present disclosure may increase the volume of the filter member 400 to improve the air fluidity, improve the filter performance, and improve a foreign substance collection capacity, and further may conveniently extend and retract the filter member 400 while placing the filter inlet 402 at the front side regardless of the manipulation panel 65 of the front panel 11 as the filter member 400 is extended or retracted in the height direction of the cabinet 10 (the Z-axis direction) via the filter inlet 402 located at the front side of the top panel 14.

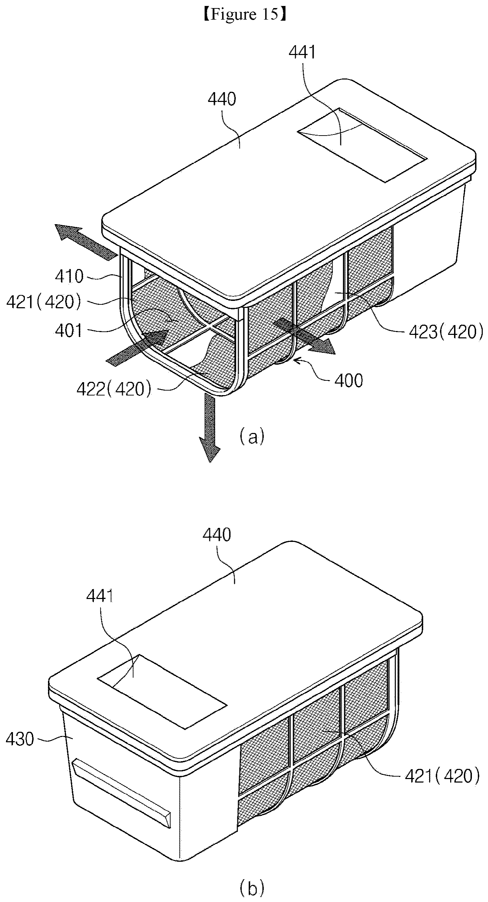

FIG. 15 shows the filter member 400 according to an embodiment of the present disclosure. (a) in FIG. 15 is a rear perspective view of the filter member 400, and (b) in FIG. 15 is a front perspective view of the filter member 400.

Referring to FIG. 15, the filter member 400 according to an embodiment of the present disclosure may include the filter space 401 described above. Air introduced into the filter space 401 may be air introduced into the filter chamber 320 via the chamber inlet 321 of the filter chamber 320. That is, air introduced into the filter space 401 may be air before the filtering.

The filter member 400 may have the three-dimensional shape with the plurality of surfaces. For example, the filter member 400 may correspond to a hexahedron, and the filter space 401 may be defined inside the hexahedron.

At least one surface of the filter member 400 may form the filter surface 420 through which air in the filter space 401 passes toward the outside of the filter member 400 and is filtered. That is, at least one of the plurality of surfaces present in the filter member 400 may include the filter surface 420 through which air passes.

Air accommodated in the filter space 401 of the filter member 400 may pass through the filter surface 420 and flow to the outside of the filter member 400. In this process, the foreign substances in air may be filtered by the filter surface 420, and the foreign substances filtered by the filter surface 420 may remain in the filter space 401 and air may flow along the circulation flow channel 110.

In an embodiment of the present disclosure, the filter member 400 may have at least two filter surfaces 420. That is, the filter surfaces 420 may be formed in at least two surfaces of the filter member 400.

Specifically, the top surface of the filter member 400 may be exposed to the outside of the cabinet 10 via the filter inlet 402 of the top panel 14, as described above. The top surface of the filter member 400 may correspond to a cover surface 440 for the filter chamber 320.

The cover surface 440 may form the top surface of the cabinet 10 together with the top panel 14, and may include a handle 441 for the user to grip. The handle 44l may include a groove into which the user may place a hand thereof.

The inlet surface 410 for air to be introduced into the filter space 401 may be defined in the rear surface of the filter member 400. That is, the rear surface of the filter member 400 may be the inlet surface 410 through which air is introduced into the filter member 400 from the outside of the filter member 400.

The inlet surface 410 may be defined as a hole is defined in the rear surface of the filter member 400 or as the rear surface is entirely opened. The inlet surface 410 may face the filter inlet 111 through which air is introduced of the filter chamber 320. Accordingly, air delivered to the filter inlet 111 along the inflow pipe 101 may be introduced into the filter space 401 via the inlet surface 410.

The filter member 400 may have the plurality of filter surfaces 420 as described above. The filter surface 420 may include a net for filtering the foreign substances and allowing air to pass therethrough, and a frame for maintaining a shape of the net and securing rigidity.

A bottom surface of the filter member 400 may correspond to a first filter surface 421 of the plurality of filter surfaces 420. Air in the filter space 401 may pass through the first filter surface 421 corresponding to the bottom surface of the filter member 400 and flow toward the chamber outlet 322 of the filter chamber 320 described above.

One of both side surfaces of the filter member 400 may correspond to a second filter surface 422 of the plurality of filter surfaces 420. The second filter surface 422 may be one surface facing the chamber outlet 322 of the filter chamber 320. The filter member 400 may be disposed such that the second filter surface 422 faces the heat exchanger 210. The second filter surface 422 may face the heat exchanger 210 and allows air to pass therethrough and be filtered.

Air in the filter space 401 may pass through the second filter surface 422 and flow toward the filter outlet 112 facing the second filter surface 422. The filter member 400 may effectively increase a filtering area size by allowing air present in the filter space 401 to flow through the first filter surface 421 and the second filter surface 422.

The other of both side surfaces of the filter member 400 may correspond to a third filter surface 423 of the plurality of filter surfaces 420. The third filter surface 423 may be an opposite surface of the second filter surface 422. The third filter surface 423 may be a surface facing one side in the width direction (the Y-axis direction) of the filter member 400.

The filter member 400 may have at least one filter surface 420 among the first filter surface 421, the second filter surface 422, and the third filter surface 423. Each filter surface 420 may be spaced apart from an inner surface of the filter chamber 320 to secure a space for air to flow.

The space between the inner surface of the filter chamber 320 and the filter member 400 may be in communication with the chamber outlet 322 of the filter chamber 320. Accordingly, air filtered via the plurality of filter surfaces 420 may be delivered to the heat exchange chamber 330, and the filter member 400 may effectively increase the filtering area size via the plurality of filter surfaces 420.

In one example, a front surface of the filter member 400 may correspond to a fixed surface 430 that is detachably fixed to the filter chamber 320. The fixed surface 430 may be detachably coupled to a facing surface among the inner surfaces of the filter chamber 320 to fix the filter member 400.

There may be various schemes by which the fixing surface 430 is fixed to the filter chamber 320. For example, the fixing surface 430 may be maintained secured to the filter chamber 320 via a hook, a protrusion, and the like. The user may separate the filter member 400 by lifting the filter member 400 upward such that the fixing surface 430 is separated from the filter chamber 320.

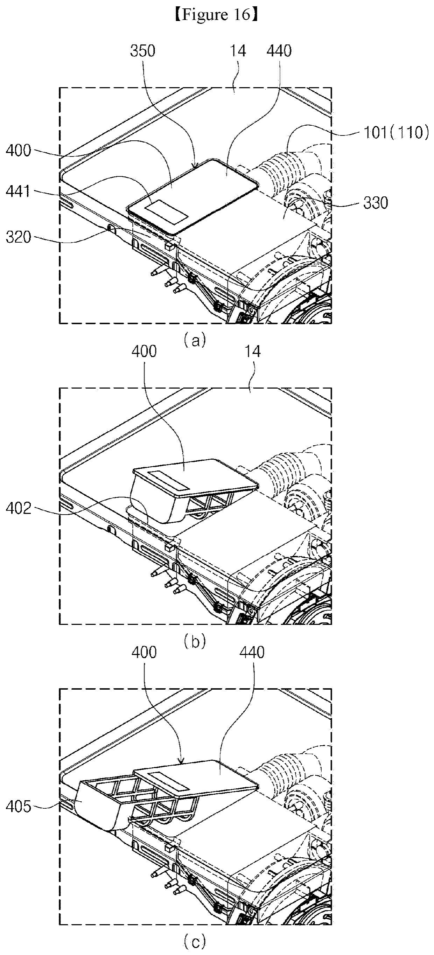

FIG. 16 shows a process of separating the filter member 400 from the cabinet 10. (a) in FIG. 16 shows the filter member 400 completely coupled to the filter chamber 320, (b) in FIG. 16 shows the front surface of the filter member 400 in (a) in FIG. 16 separated from the filter chamber 320, and (c) in FIG. 16 shows the rear surface of the filter member 400 in (b) in FIG. 16 separated from the filter chamber 320.

Referring to FIG. 16, in the process of separating the filter member 400 from the filter chamber 320, one of the front surface and the rear surface may be separated first and then the rest may be separated. The front surface of the filter member 400 may be separated first, and then the rear surface thereof may be separated.

In this case, because the front surface of the filter member 400 facing the user is separated first, the user may conveniently separate the filter member 400. Specifically, when the user grips the handle 441 defined in the cover surface 440 and lifts the handle 441 upward in a state in which the filter member 400 is inserted into the filter chamber 320 and the top surface (the cover surface) 440 is exposed to the outside, the filter member 400 may be extended from the filter chamber 320.

The handle 441 may be defined in a front side of the cover surface 440 such that the user may easily lift the front surface of the filter member 400.

As a front portion of the filter member 400 is lifted, the fixed surface 430 of the filter member 400 may be disengaged and separated from the filter chamber 320.

With the fixed surface 430 of the filter member 400 positioned outside the filter chamber 320, for example, upward of the filter inlet 402, the user may separate an entirety of the filter member 400 from the filter chamber 320 or separate only a portion of the filter member 400 from the filter chamber 320.

For example, in an embodiment of the present disclosure, the filter member 400 may include a filter frame 405 in addition to the cover surface 440 described above. The filter frame 405 may correspond to a main body of the filter member 400, and the filter frame 405 may include the filter space 401 and the plurality of filter surfaces 420 described above.

The filter frame 405 may be formed in a shape with an open top surface, and the cover surface 440 may be coupled to the filter frame 405 such that the open top surface of the filter frame 405 is closed.

The cover surface 440 may be detachably coupled to the filter frame 405. For example, the filter frame 405 may be separated from the cover surface 440 by moving forward from the cover surface 440.

In this case, the user may separate the filter frame 405 from the cover surface 440 by moving the filter frame 405 forward while at least a portion of the cover surface 440 is still located at the filter inlet 402, thereby removing the foreign substances collected in the filter space 401 via the open top surface of the filter frame 405.

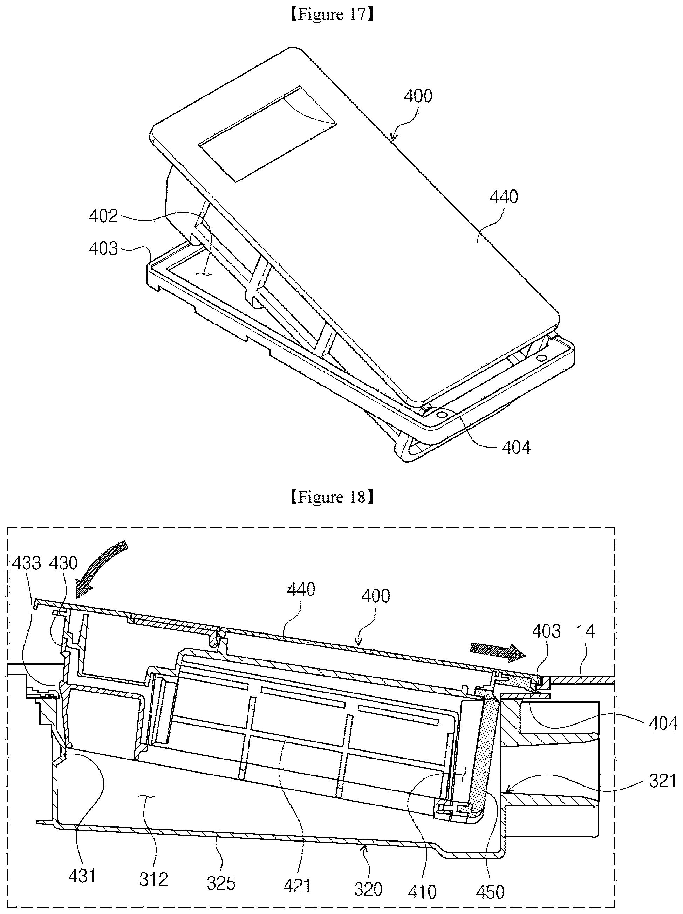

FIG. 17 shows a fixing protrusion 404 disposed on the filter member 400 in the laundry treating apparatus 1.

Specifically, as described above, the front surface of the filter member 400 facing the user may be separated from the filter chamber 320 first and then the rear surface thereof may be separated from the filter chamber 320, and the fixing protrusion 404 that suppresses the filter member 400 from being extended out of the cabinet 10 may be disposed at a rear end of the filter member 400.

The fixing protrusion 404 may be disposed on the filter frame 405 or the cover surface 440. When the fixing protrusion 404 protrudes rearward from a rear end of the cover surface 440 as shown in FIG. 17, the top panel 14 may include a hole or a groove into which the fixing protrusion 404 is inserted.

For example, the top panel 14 may include an opening peripheral portion 403 that surrounds the filter inlet 402, and the fixing protrusion 404 of the filter member 400 may be inserted into a hole or a groove defined in the opening peripheral portion 403.

The fixing protrusion 404 may allow pivoting of the filter member 400 about the fixing protrusion 404. Accordingly, the user may lift the front side of the filter member 400 and pivot the filter member 400 about the fixing protrusion 404.

When the filter member 400 pivots and the front surface of the filter member 400 is completely exposed to the outside of the filter inlet 402, the user may move the filter member 400 forward to separate the fixing protrusion 404 from the opening peripheral portion 403. Alternatively, the user may move only the filter frame 405 of the filter member 400 forward to expose the filter space 401 of the filter member 400 to the outside.

FIG. 18 shows the filter member 400 disposed outside the cabinet 10 being inserted into the filter chamber 320.

As described above, the chamber inlet 321 of the filter chamber 320 may be defined in the rear surface of the filter chamber 320. The inlet surface 410 may correspond to the rear surface of the filter member 400.

In the process of retracting the filter member 400, in the filter member 400, the fixing protrusion 404 disposed on the inlet surface 410 may first be inserted into the groove or the hole of the opening peripheral portion 403 described above. In the process of inserting the fixing protrusion 404 into the groove or the hole, the inlet surface 410 of the filter member 400 may be sufficiently moved into the filter chamber 320.

Thereafter, the user may insert the fixed surface 430 into the filter chamber 320 by moving the fixed surface 430 of the filter member 400 downward about the fixing protrusion 404.

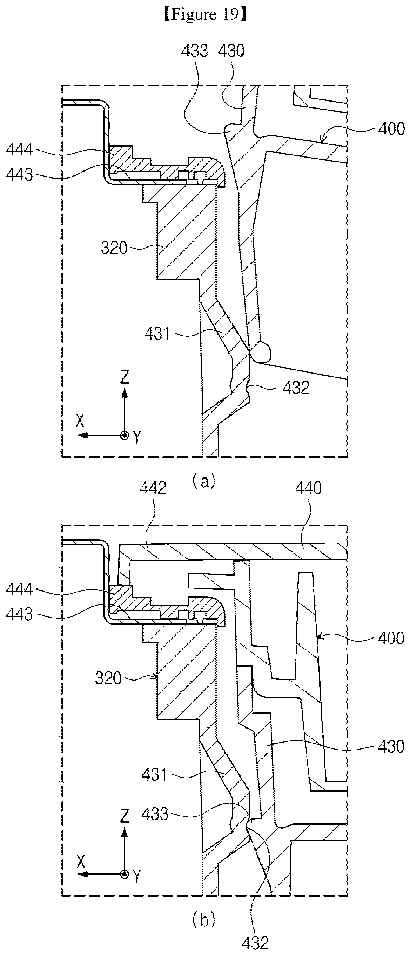

FIG. 19 shows a process in which the fixed surface 430 is coupled to the inner surface of the filter chamber 320 in an embodiment of the present disclosure. As described above, the front surface of the filter member 400 may form the fixed surface 430 that is releasably fixed to the filter chamber 320. That is, a surface of the filter member 400 facing the inlet surface 410 may form the fixed surface 430 that is fixed to the filter chamber 320.

As shown in (a) in FIG. 19, during the retraction process of the filter member 400, as the fixed surface 430 moves downward, a filter protrusion 433 disposed on the fixed surface 430 may move to face a front surface among the inner surfaces of the filter chamber 320.

The filter protrusion 433 may protrude forward from the fixed surface 430. In one example, a protrusion accommodating portion 432 in which at least a portion of the filter protrusion 433 is accommodated and fixed in a separable manner may be defined in the front surface among the inner surfaces of the filter chamber 320.

The protrusion accommodating portion 432 may be defined in a shape of a groove recessed away from the filter protrusion 433. At least a front end of the filter protrusion 433 may be inserted into and fixed to the protrusion accommodating portion 432.

(b) in FIG. 19 shows the filter protrusion 433 being accommodated in the protrusion accommodating portion 432. The front surface among the inner surfaces of the filter chamber 320 may include a chamber protrusion 431 that protrudes toward the filter member 400 to strengthen a force of coupling with the filter member 400.

The protrusion accommodating portion 432 may be defined in the chamber protrusion portion 431. Accordingly, a fixing force of the filter member 400 may be strengthened by a force of the chamber protrusion 431 of the filter chamber 320 and the filter protrusion 433 of the filter member 400 pushing each other.

In one example, a cover seating portion 443 on which a front end of the cover surface 440 of the filter member 400 is seated may be disposed on the front surface of the filter member 400. For example, the cover surface 440 of the filter member 400 may include a front extension 442. The front extension 442 may correspond to the front end of the cover surface 440 and may protrude forwardly of the filter frame 405.

In a state in which the filter member 400 is completely coupled to the filter chamber 320, the front extension 442 of the cover surface 440 may be seated on the cover seating portion 443 located on the filter chamber 320.

The cover seating portion 443 may include a seating sealer 444 to suppress air leakage between the cover surface 440 and the filter chamber 320. In this case, the front extension 442 of the cover surface 440 may be located on the seating sealer 444 and may be seated on the cover seating portion 443 via the seating sealer 444.

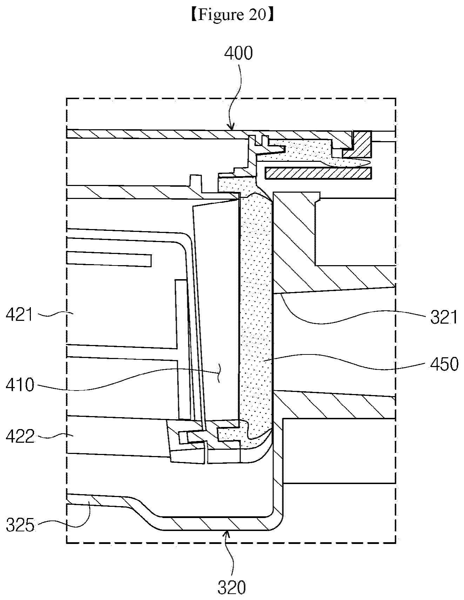

FIG. 20 shows a filter sealer 450 disposed in the filter member 400 or the filter chamber 320.

The inlet surface 410 of the filter member 400 may include the filter sealer 450 that is disposed between the inlet surface 410 and the chamber inlet 321 of the filter chamber 320 and suppresses air leakage. The filter sealer 450 may be disposed in the chamber inlet 321.

The filter sealer 450 may surround the openings of the inlet surface 410 of the filter member 400 and/or the chamber inlet 321 to suppress the air leakage between the inlet surface 410 and the chamber inlet 321.

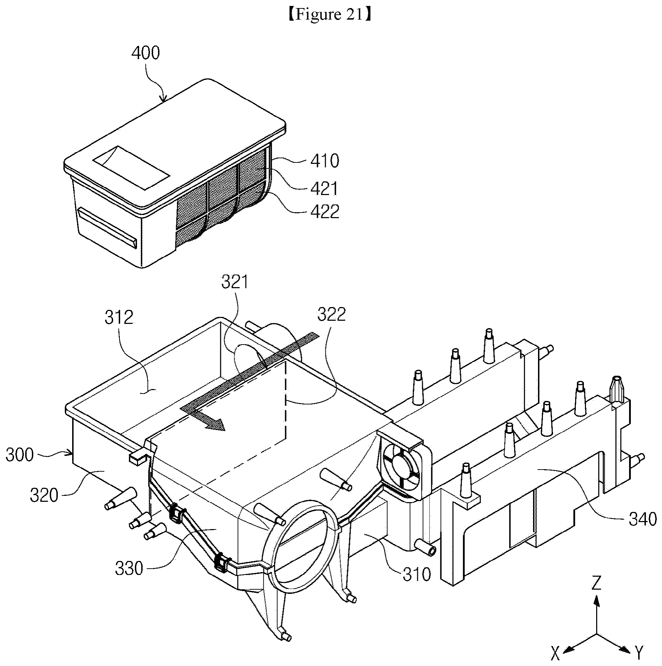

FIG. 21 shows a flow of air flowing inside the filter chamber 320. In FIG. 21, a flow direction of air is indicated by an arrow.

In an embodiment of the present disclosure, the laundry treating apparatus 1 may include a filter assembly 350, and the filter assembly 350 may include the filter chamber 320 disposed in the air circulator 100 and the filter member 400 that is disposed in the filter chamber 320 to filter the foreign substances in air.

The filter chamber 320 may include the chamber inlet 321 and the chamber outlet 322. The chamber inlet 321 may allow air to be introduced along the first direction, and the chamber outlet 322 may allow air to be discharged along the second direction intersecting the first direction.

The first direction and the second direction may vary. For example, as described above, the first direction may be parallel to the front and rear direction of the cabinet 10 (the X-axis direction) by the locations of the inflow pipe 101 and the chamber inlet 321, and the second direction may be parallel to the width direction of the cabinet 10 (the Y-axis direction) by the location of the chamber outlet 322.

Accordingly, the flow direction of air inside the filter chamber 320 may change. For example, the flow direction of air may change from the first direction to the second direction. The flow direction of air may change from the front and rear direction of the cabinet 10 to the width direction.

Correspondingly, in an embodiment of the present disclosure, the inlet surface 410 of the filter member 400 may introduce air into the filter space 401 along the first direction, the first filter surface 421 may be connected to the inlet surface 410, but may face the chamber outlet 322, and the second filter surface 422 may form the bottom surface or one side surface of the filter member 400 described above. Accordingly, air in the filter space 401 may flow along the second direction via the first filter surface 421 and the second filter surface 422.

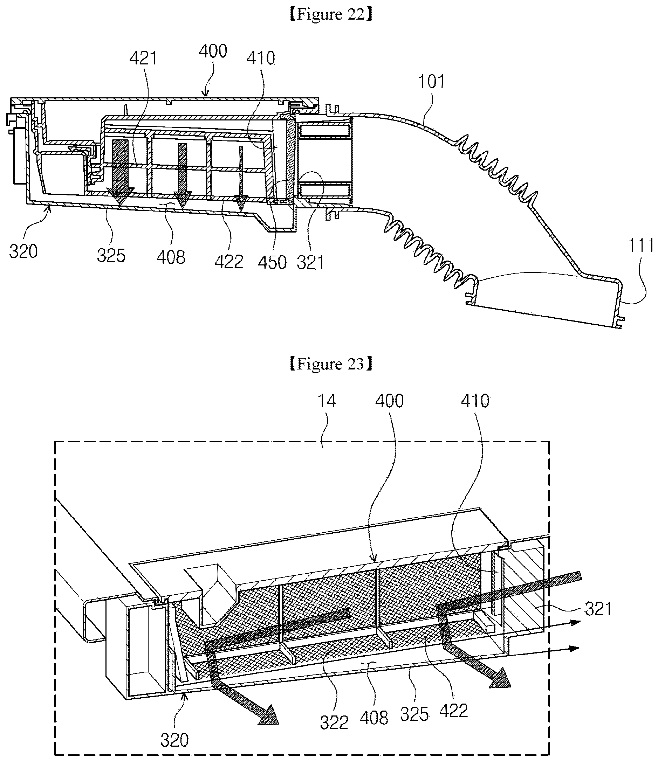

FIG. 22 shows a cross-section of the filter assembly 350 viewed from the width direction of the cabinet 10 (the Y-axis direction). In FIG. 22, the flow of air discharged via the second filter surface 422 is shown by an arrow.

As described above, when the flow direction of air changes inside the filter chamber 320, a centrifugal force may be applied to air based on an inflection of the flow direction, so that flow rate non-uniformity on a flow cross-section may occur.

For example, when describing the change in the flow direction of air inside the filter chamber 320 as a curved motion of air, the centrifugal force may act more as a distance from a center of the curve increases, which may cause the air flow rate to increase.

In other words, the flow rate of air inside the filter chamber 320 may increase as air is located further away from the chamber inlet 321. In FIG. 22, flow rate differences of air at different distances from the chamber inlet 321 are indicated by differences in a size of arrows. This air crowding phenomenon may increase as an angle of change in the flow direction of air increases.

When the flow rate uniformity is lowered on the flow cross-section of air defined at an arbitrary point as such, it is difficult to significantly increase the flow rate of air even when a flow cross-sectional area of air is increased.

FIG. 23 shows the bottom surface among the inner surfaces of the filter chamber 320 extending at an angle according to an embodiment of the present disclosure.

In an embodiment of the present disclosure, the bottom surface of the filter chamber 320 or the bottom surface of the filter member 400 may extend at an angle to suppress the occurrence of the flow rate non-uniformity caused by the change in the flow direction of air as described above.

Specifically, in an embodiment of the present disclosure, a separation distance between one surface of the filter chamber 320 facing the second filter surface 422 and the second filter surface 422 may decrease as a distance from the inlet surface 410 increases.

In this regard, the second filter surface 422 is the filter surface 420 extending from the inlet surface 410 along the first direction, and there is no significant difference when using the third filter surface 423 described above depending on need.

As described above, in the process of changing the flow direction of air from the first direction to the second direction, the flow rate of air may increase as the distance from the inlet surface 410 increases because of the centrifugal force or the like.

In consideration of the same, an embodiment of the present disclosure may relatively increase the flow resistance of air as the distance from the inlet surface 410 increases relative to the second filter surface 422, thereby improving the air flow rate uniformity on the second filter surface 422 along the first direction.

To adjust the air resistance, an embodiment of the present disclosure may adjust the separation distance between the second filter surface 422 and the one surface of the filter chamber 320 facing the second filter surface 422.

The separation distance between the filter surface 420 and the inner surface of the filter chamber 320 may be corresponded to the flow resistance of air with respect to the filter surface 420. In other words, as the distance between the filter surface 420 and the inner surface of the filter chamber 320 increases, the air flow resistance in the corresponding area may decrease, and as the distance between the filter surface 420 and the inner surface of the filter chamber 320 decreases, the air flow resistance in the corresponding area may increase.

Therefore, the separation distance between the second filter surface 422 and the one surface of the filter chamber 320 may increase as the distance to the inlet surface 410 of the filter member 400 decreases, and the separation distance between the second filter surface 422 and the one surface of the filter chamber 320 may decrease as the distance to the inlet surface 410 of the filter member 400 increases, thereby suppressing an increase in the flow rate non-uniformity caused by concentration of the flow rate of air in an area of the second filter surface 422 located away from the inlet surface 410.

In an embodiment of the present disclosure, the one surface of the filter chamber 320 facing the second filter surface 422 may extend at an angle with respect to the second filter surface 422. The one surface may extend at an angle along the first direction. The one surface may extend at an angle such that as the distance from the inlet surface 410 of the filter member 400 increases along the first direction, the distance to the second filter surface 422 decreases.

The first filter surface 421 and the second filter surface 422 may extend from the inlet surface 410 along the first direction, and the second filter surface 422 may be connected to the inlet surface 410 and the first filter surface 421.

For example, the second filter surface 422 may face a bottom surface 325 of the filter chamber 320. The second filter surface 422 may be the bottom surface of the filter member 400. The bottom surface 325 of the filter chamber 320 may extend at an angle such that as the distance from the inlet surface 410 increases, the separation distance to the second filter surface 422 decreases.

Furthermore, in an embodiment of the present disclosure, the one surface of the filter chamber 320 may be approximately parallel to the ground, but the second filter surface 422 of the filter member 400 may extend at an angle with respect to the one surface, or both the second filter surface 422 of the filter member 400 and the one surface of the filter chamber 320 may extend at an angle.

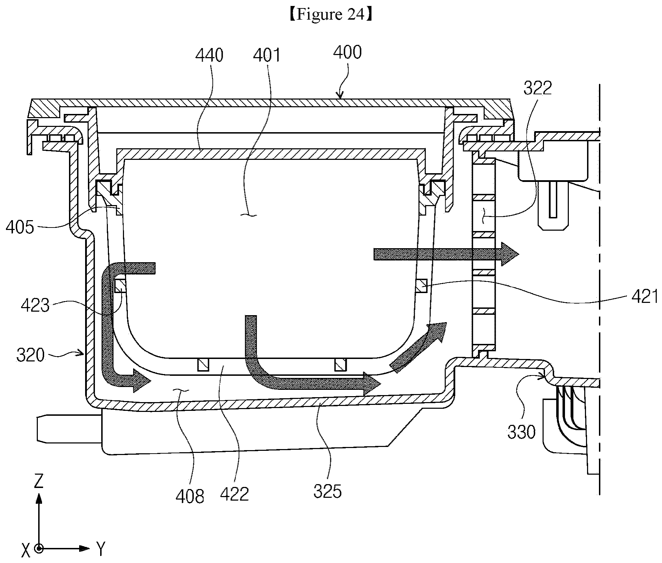

FIG. 24 shows air flowing through the first filter surface 421, the second filter surface 422, and the third filter surface 423 disposed in the filter member 400.

Air that has passed through the first filter surface 421 and the second filter surface 422 may flow along a separation space 408 between the filter member 400 and the filter chamber 320 and be discharged via the chamber outlet 322.

The first filter surface 421, the second filter surface 422, and the third filter surface 423 may all be spaced apart from the inner surfaces of the filter chamber 320, and the air that has passed through the filter surfaces 420 may be collected in the separation space 408 between the filter member 400 and the inner surface of the filter chamber 320 and be discharged from the filter chamber 320 via the chamber outlet 322.

The third filter surface 423 may be connected to the inlet surface 410. The first filter surface 421, the second filter surface 422, and the third filter surface 423 may extend from the inlet surface 410 along the first direction.

The second filter surface 422 may be connected to the inlet surface 410 and the first filter surface 421, and the third filter surface 423 may be connected to the inlet surface 410 and the second filter surface 422, but may be spaced apart from the first filter surface 421.

For example, the first filter surface 421 may form one of the both side surfaces of the filter member 400 along the width direction of the cabinet 10 (the Y-axis direction), the second filter surface 422 may form the bottom surface of the filter member 400, and the third filter surface 423 may form the other of the both side surfaces of the filter member 400.

For reference, the second filter surface 422 and the third filter surface 423 are not necessarily distinguished from each other based on names thereof. For example, the second filter surface 422 may be the other of the both side surfaces of the filter member 400, and the third filter surface 423 may be the bottom surface of the filter member 400.

An embodiment of the present disclosure may effectively increase the filtering area size even in a limited space of air via the filter member 400 having the plurality of filter surfaces 420. In addition, as described above, the non-uniformity of the air flow rate may be effectively reduced even when the flow direction of air changes by utilizing the inclined extension shape in which the separation distance between the filter surface 420 and the inner surface of the filter chamber 320 changes.

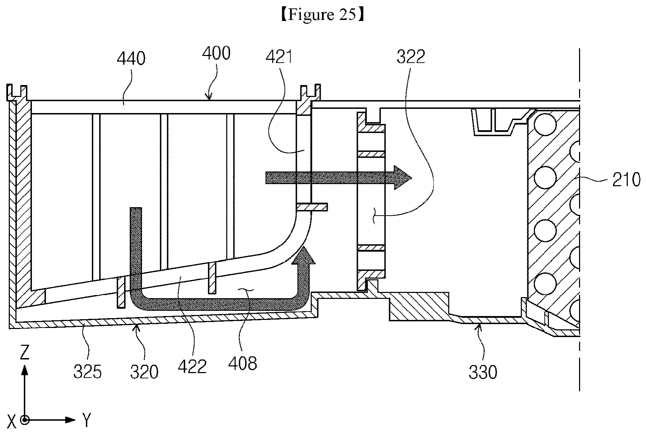

FIG. 25 shows the second filter surface 422 corresponding to the bottom surface of the filter member 400 extending at an angle along the above-described second direction according to an embodiment of the present disclosure.

As described above, in an embodiment of the present disclosure, the flow rate of air may be non-uniform in the first direction, for example, in the front and rear direction of the cabinet 10 (the X-axis direction), but may also be non-uniform in the second direction, for example, in the width direction of the cabinet 10 (the Y-axis direction).

Specifically, when the flow of air has the curved shape, the flow rate of air may increase because of the centrifugal force as the distance from the center of the curve increases. When viewing such phenomenon based on the width direction Y of the cabinet 10, the flow rate increases because of the centrifugal force as a distance from the chamber outlet 322 increases, based on a cross-section of the filter member 400 viewed from the front.

Accordingly, an embodiment of the present disclosure may allow the second filter surface 422 corresponding to the bottom surface of the filter member 400 to extend at an angle along the width direction Y of the cabinet 10, thereby improving the uniformity of the air flow rate on the second filter surface 422 via relative air resistance adjustment.

More specifically, the second filter surface 422 may face the bottom surface 325 of the filter chamber 320. The separation distance between the bottom surface 325 of the filter chamber 320 and the second filter surface 422 may decrease as a distance from the first filter surface 421 increases.

In other words, the separation distance between one surface of the filter chamber 320 facing the second filter surface 422 and the second filter surface 422 may decrease as the distance from the first filter surface 421 increases.

To this end, the second filter surface 422 may extend at an angle with respect to the bottom surface 325 of the filter chamber 320. The second filter surface 422 may extend at an angle from the first filter surface 421 along the second direction.

However, the second filter surface 422 is not necessarily limited to extending at an angle, the bottom surface 325 of the filter chamber 320 may extend at an angle along the second direction, and the second filter surface 422 and the bottom surface 325 of the filter chamber 320 may also extend at an angle along the second direction.

In one example, in an embodiment of the present disclosure, all of the surfaces of the filter member 400 extending along the first direction do not need to be the filter surfaces 420. For example, as shown in FIG. 25, the third filter surface 423 may be omitted and only the first filter surface 421 and the second filter surface 422 may be disposed in the filter member 400.

In this case, a surface opposite to the first filter surface 421 among the both side surfaces of the filter member 400 may be understood as a wall through which air does not pass, and the opposing surface may be in close contact with the inner surface of the filter chamber 320 to prevent an unnecessary increase of the separation space 408.

Although the present disclosure is shown and described in relation to the specific embodiment, it will be obvious to those skilled in the art that the present disclosure may be improved and changed in various ways without departing from the technical spirit of the present disclosure provided by the following patent claims.

## Claims

1. A laundry treating apparatus comprising:
a cabinet;
a drum rotatably disposed inside the cabinet and configured to accommodate laundry therein;
an air circulator disposed inside the cabinet and configured to circulate air inside the drum; and
a filter assembly including a filter chamber disposed in the air circulator and a filter member disposed in the filter chamber to filter foreign substances in air,
wherein the filter chamber includes a chamber inlet allowing air to be introduced along a first direction and a chamber outlet allowing air to be discharged along a second direction intersecting the first direction,
wherein the filter member includes an inlet surface facing the chamber inlet and allowing air to be introduced into a filter space defined inside the filter member along the first direction; a first filter surface connected to the inlet surface, facing the chamber outlet, and allowing air in the filter space to pass therethrough along the second direction and be filtered; and a second filter surface connected to the inlet surface and allowing air in the filter space to pass therethrough and be filtered,
wherein a separation distance between one surface of the filter chamber facing the second filter surface and the second filter surface decreases as a distance from the inlet surface increases.

2. The laundry treating apparatus of claim 1, wherein air that has passed through the first filter surface and the second filter surface flows along a separation space between the filter member and the filter chamber and is discharged via the chamber outlet.

3. The laundry treating apparatus of claim 1, wherein the one surface of the filter chamber facing the second filter surface extends at an angle with respect to the second filter surface.

4. The laundry treating apparatus of claim 1, wherein the one surface of the filter chamber facing the second filter surface extends at an angle along the first direction.

5. The laundry treating apparatus of claim 1, wherein the second filter surface faces a bottom surface of the filter chamber,
wherein the bottom surface of the filter chamber extends at an angle such that a separation distance to the second filter surface decreases as a distance from the inlet surface increases.

6. The laundry treating apparatus of claim 1, wherein the first filter surface and the second filter surface extend from the inlet surface along the first direction.

7. The laundry treating apparatus of claim 1, wherein the second filter surface is connected to the inlet surface and the first filter surface.

8. The laundry treating apparatus of claim 7, wherein the second filter surface faces a bottom surface of the filter chamber,
wherein a separation distance between the bottom surface of the filter chamber and the second filter surface decreases as a distance from the first filter surface increases.

9. The laundry treating apparatus of claim 8, wherein the second filter surface extends at an angle with respect to the bottom surface of the filter chamber.

10. The laundry treating apparatus of claim 8, wherein the second filter surface extends at an angle from the first filter surface along the second direction.

11. The laundry treating apparatus of claim 1, wherein the filter member further includes a third filter surface connected to the inlet surface and allowing air in the filter space to pass therethrough and be filtered.

12. The laundry treating apparatus of claim 11, wherein the first filter surface, the second filter surface, and the third filter surface extend from the inlet surface along the first direction.

13. The laundry treating apparatus of claim 11, wherein the second filter surface is connected to the inlet surface and the first filter surface,
wherein the third filter surface is connected to the inlet surface and the second filter surface, but is spaced apart from the first filter surface.

14. The laundry treating apparatus of claim 11, wherein the first filter surface corresponds to one of both side surfaces of the filter member along a width direction of the cabinet,
wherein the second filter surface corresponds to a bottom surface of the filter member,
wherein the third filter surface corresponds to the other of the both side surfaces of the filter member.

15. The laundry treating apparatus of claim 1, wherein the inlet surface of the filter member includes a filter sealer disposed between the inlet surface and the chamber inlet of the filter chamber to suppress air leakage.

16. The laundry treating apparatus of claim 1, wherein a surface of the filter member facing the inlet surface forms a fixed surface fixed to the filter chamber.

17. The laundry treating apparatus of claim 1, wherein the air circulator is located on the tub inside the cabinet.

18. The laundry treating apparatus of claim 17, wherein the filter member is extended from the filter chamber to the outside of the cabinet via a top surface of the cabinet.

19. The laundry treating apparatus of claim 18, wherein the cabinet includes a top panel defining the top surface thereof,
wherein the top panel includes a filter inlet, wherein the filter member is inserted into the filter inlet.

20. The laundry treating apparatus of claim 17, wherein the air circulator includes a circulation flow channel including an inlet allowing air to be introduced from the tub and an outlet disposed forward of the inlet and allowing air to be discharged to the tub,
wherein the filter assembly is disposed in the circulation flow channel and disposed forward of the inlet.

21. The laundry treating apparatus of claim 20, wherein the circulation flow channel includes an inflow pipe extending forward from the inlet and connected to the filter chamber,
wherein the chamber inlet is defined in a rear surface of the filter chamber.

22. The laundry treating apparatus of claim 20, wherein the inlet surface corresponds to a rear surface of the filter member,
wherein a front surface of the filter member forms a fixed surface releasably fixed to the filter chamber.

23. The laundry treating apparatus of claim 17, further comprising a drainage located under the tub inside the cabinet and configured to discharge water from the tub.

24. The laundry treating apparatus of claim 17, further comprising a detergent supply located under the tub inside the cabinet and configured to supply detergent into the tub.

25. The laundry treating apparatus of claim 17, further comprising an additional treating apparatus including an additional cabinet located under the cabinet and an additional drum disposed inside the additional cabinet and configured to accommodate laundry therein,
wherein the cabinet is disposed on the additional cabinet.

26. The laundry treating apparatus of claim 1, wherein the air circulator includes a first flow channel extending along the first direction and a second flow channel extending from the first flow channel along the second direction,
wherein the filter chamber is disposed at a connection point of the first flow channel and the second flow channel.

27. The laundry treating apparatus of claim 26, wherein the air circulator further includes a heat exchanger disposed in the second flow channel and configured to perform heat exchange between air and a refrigerant.

28. The laundry treating apparatus of claim 27, wherein the chamber outlet of the filter chamber is defined to face the heat exchanger.

29. The laundry treating apparatus of claim 1, wherein the air circulator further includes:
a heat exchanger configured to perform heat exchange between air flowing through the air circulator and a refrigerant; and
a mounting base including a heat exchange chamber where the filter chamber and the heat exchanger are mounted.

30. The laundry treating apparatus of claim 29, wherein the filter member and the heat exchanger are aligned parallel to a width direction of the cabinet in the mounting base.

31. The laundry treating apparatus of claim 29, wherein the mounting base is constructed such that the filter chamber and the heat exchange chamber share one surface,
wherein the filter chamber includes the chamber outlet in the one surface shared with the heat exchange chamber,
wherein the heat exchange chamber receives air via the chamber outlet of the filter chamber.

32. A laundry treating apparatus comprising:
a cabinet;
a drum rotatably disposed inside the cabinet and configured to accommodate laundry therein;
an air circulator disposed inside the cabinet and configured to circulate air inside the drum; and
a filter assembly including a filter chamber disposed in the air circulator and a filter member disposed in the filter chamber to filter foreign substances in air,
wherein the filter chamber includes a chamber inlet allowing air to be introduced along a first direction and a chamber outlet allowing air to be discharged along a second direction intersecting the first direction,
wherein the filter member includes an inlet surface facing the chamber inlet and allowing air to be introduced into a filter space defined inside the filter member along the first direction; a first filter surface connected to the inlet surface, facing the chamber outlet, and allowing air in the filter space to pass therethrough along the second direction and be filtered; and a second filter surface connected to the inlet surface and the first filter surface and allowing air in the filter space to pass therethrough and be filtered,
wherein a separation distance between one surface of the filter chamber facing the second filter surface and the second filter surface decreases as a distance from the first filter surface increases.
